(19) Europäisches Patentamt
European Patent Office
Office européen des brevets

(11) **EP 4 361 843 A1**

(12) # EUROPEAN PATENT APPLICATION
published in accordance with Art. 153(4) EPC

(43) Date of publication:
**01.05.2024 Bulletin 2024/18**

(21) Application number: **22841352.2**

(22) Date of filing: **12.07.2022**

(51) International Patent Classification (IPC):
*G06F 16/332* (2019.01)     *G06N 3/04* (2023.01)

(86) International application number:
**PCT/CN2022/105115**

(87) International publication number:
**WO 2023/284716 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.07.2021 CN 202110803202**

(71) Applicant: **Huawei Technologies Co., Ltd.
Shenzhen, Guangdong 518129 (CN)**

(72) Inventors:
• **XU, Hang
Shenzhen, Guangdong 518129 (CN)**
• **REN, Xiaozhe
Shenzhen, Guangdong 518129 (CN)**
• **YIN, Yichun
Shenzhen, Guangdong 518129 (CN)**
• **QIAN, Li
Shenzhen, Guangdong 518129 (CN)**
• **LI, Zhenguo
Shenzhen, Guangdong 518129 (CN)**
• **JIANG, Xin
Shenzhen, Guangdong 518129 (CN)**
• **GAO, Jiahui
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **NEURAL NETWORK SEARCHING METHOD AND RELATED DEVICE**

(57)     This application relates to the artificial intelligence field, and discloses a neural network search method and a related apparatus. The neural network search method includes: constructing attention heads (heads) in transformer layers by sampling a plurality of candidate operators during model search, to construct a plurality of candidate neural networks, and comparing performance of the plurality of candidate neural networks to select a target neural network with higher performance. In this application, a transformer model is constructed with reference to model search, so that a new attention structure with better performance than an original self-attention mechanism can be generated, and effect in a wide range of downstream tasks is significantly improved.

Obtain a plurality of candidate neural networks, where at least one candidate neural network in the plurality of candidate neural networks includes a target transformer layer, the target transformer layer includes a target attention head (head), the target attention head includes a plurality of operators, and the plurality of operators are obtained by sampling a plurality of candidate operators included in a first search space — 1201

Select a target neural network from the plurality of candidate neural networks based on performance of the plurality of candidate neural networks — 1202

FIG. 12

EP 4 361 843 A1

## Description

This application claims priority to Chinese Patent Application No. 202110803202.X, filed with the China National Intellectual Property Administration on July 15, 2021 and entitled "NEURAL NETWORK SEARCH METHOD AND RELATED DEVICE", which is incorporated herein by reference in its entirety.

## TECHNICAL FIELD

This application relates to the artificial intelligence field, and in particular, to a neural network search method and a related device.

## BACKGROUND

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. The artificial intelligence is intended to study design principles and implementation methods of various intelligent machines, so that the machines have perception, inference, and decision-making functions.

With continuous development of artificial intelligence technologies, a natural language human-machine interaction system that enables human-machine interaction to be performed by using a natural language becomes increasingly important. The human-machine interaction to be performed by using the natural language requires the system to recognize a specific meaning of a human natural language. Generally, the system extracts key information from a natural language sentence to recognize a specific meaning of the sentence.

A transformer structure has a powerful semantic representation capability and can capture a dependency between pieces of long text. Since the transformer structure was proposed, the transformer structure has significantly surpassed previous models in terms of a series of natural language processing tasks represented by translation. A pre-trained language model based on the transformer structure has also achieved very good effect in fields such as a question-answering system and a voice assistant.

With rapid development of artificial intelligence technologies, a neural network with excellent performance usually has a delicate network architecture, which requires that experts with high skills and extensive experience need to make great efforts to construct the neural network. A neural architecture search (neural architecture search, NAS) method is proposed to better construct a neural network, and automatic search is performed on neural network architectures, to obtain a neural network architecture with excellent performance.

An existing neural network search method for a transformer model has limited performance improvement for the transformer model.

## SUMMARY

According to a first aspect, this application provides a neural network search method, and the method includes: obtaining a plurality of candidate neural networks, where at least one candidate neural network in the plurality of candidate neural networks includes a target transformer layer, the target transformer layer includes a target attention head (head), the target attention head includes a plurality of operators, and the plurality of operators are obtained by sampling a plurality of candidate operators included in a first search space.

It may be determined, in a sampling or fixed setting manner, that a type of a network layer in the candidate neural network is a transformer layer (which may be referred to as the target transformer layer in this embodiment of this application), and a structure of the target attention head (head) in the target transformer layer is determined by sampling the operators in the first search space.

In a possible implementation, a source of operator sampling may be the first search space, and the first search space may include the plurality of candidate operators. When an attention head (head) is constructed, the plurality of candidate operators in the first search space may be sampled, and candidate operators obtained through sampling are combined to obtain the attention head (head) in one transformer layer. After a plurality of times of sampling, attention heads (heads) in a plurality of transformer layers may be obtained. Specifically, in a possible implementation, the target attention head may be constructed by sampling the candidate operators in the first search space. Specifically, the plurality of operators and a connection relationship between the plurality of operators may be sampled from the first search space. In other words, when the target attention head is constructed, a type of each operator, a quantity of operators, and the connection relationship between the operators that are included in the target attention head may be determined in a sampling manner. Further, the target attention head (head) may be constructed based on the plurality of operators obtained through sampling and the sampled connection relationship between the plurality of operators.

It should be understood that sampling in this embodiment of this application may be random sampling or non-random sampling. Random sampling may be a sampling method for selecting a sample from a population according to a randomization principle. Random sampling includes, for example, but is not limited to, simple random sampling, systematic sampling, cluster sampling, and stratified sampling. Non-random sampling may be a sampling method for making probabilities of different pieces of sampled information in each sampling not exactly the same based on specific probability distribution or in another manner of guiding a sampling process.

Sampling in this embodiment of this application may include sampling of a network layer type (the network layer type specifically includes the transformer layer and a target network layer), sampling of a plurality of operators in an attention head (head) (specifically including sampling of a type of the operator, sampling of a quantity of operators, and sampling of a connection relationship between the operators), sampling of a quantity of transformation matrices in the attention head (head), and sampling of a size of a convolution kernel of a convolutional layer in the target network layer. The foregoing sampling process may be partially implemented through random sampling, and partially implemented through non-random sampling, or may be completely implemented through random sampling, or may be completely implemented through non-random sampling.

Sampling of the network layer type is used to determine network types of network layers connected in series in the candidate neural network (the network type may be the transformer layer, the target network layer, or another network type).

Sampling of the plurality of operators in the attention head (head) is used to determine the type of the operator, the quantity of operators, and the connection relationship between the operators that are included in the attention head (head). The type of the operator is obtained by sampling the plurality of candidate operators in the first search space. The quantity of operators is obtained through sampling within a preset range. For example, a quantity of operators ranging from 5 to 20 is determined for target head sampling. The connection relationship between the operators is obtained by performing sampling based on a quantity flow direction between the plurality of operators obtained through sampling. For example, the plurality of operators obtained through sampling include an operator A and an operator B. In this case, whether the operator A is connected to the operator B may be determined in a sampling manner. When a connection relationship between the operator A and the operator B exists, whether an output of the operator A is used as an input of the operator B or an output of the operator B is used as an input of the operator A may also be determined in the sampling manner.

Sampling of the quantity of transformation matrices in the attention head (head) is used to determine the quantity of transformation matrices included in the attention head (head). The sampled quantity may have an upper limit and/or a lower limit, for example, is determined through sampling in a quantity interval of 1 to 4, or is determined through sampling in a quantity interval of 2 to 4, or is determined through sampling in a quantity interval of 2 and 3. This is not limited herein. The method further includes: selecting a target neural network from the plurality of candidate neural networks based on performance of the plurality of candidate neural networks.

After the plurality of candidate neural networks are obtained, the plurality of neural networks may be trained to obtain performance of each candidate neural network, and then the target neural network may be selected from the plurality of candidate neural networks based on the performance of each candidate neural network, where there is at least one target neural network. When there is one target neural network, the target neural network may be a model with best performance in the plurality of candidate neural networks. When there are a plurality of target neural networks, the target neural networks may be a plurality of models with best performance in the plurality of candidate neural networks.

In the foregoing manner, combined with model search, a new attention structure that is stronger than an original self-attention mechanism can be generated, and effect in a wide range of downstream tasks is significantly improved.

In a possible implementation, the first search space includes the plurality of candidate operators, and the candidate operators are unary operators or binary operators. The unary operator (unary operation) refers to performing an operation on only one piece of data, for example, a negative (neg) number operation, a square root (sqrt) operation, a transpose (transpose) operation, a softmax operation, a logsigmoid operation, and a softsign operation. The binary operator (binary operation) refers to a rule for performing an operation on two pieces of data to obtain a third piece of data, for example, an add (add) operation, a dot multiplication (matmul) operation, a cosine similarity operation, and a euclidean distance operation.

Compared with operator types of an existing attention head, types of the foregoing candidate operators are more abundant, which greatly increases a structure type of a candidate transformer layer, and further increases a possibility of finding a transformer model with better performance. In a possible implementation, the plurality of candidate operators include a softmax operator and a dot multiplication operator.

On a premise that operator types are enriched, a softmax operator and a dot multiplication operator in the existing attention head (head) are retained. Because the softmax operator and the dot multiplication operator are important operator types in an attention mechanism, when operator sampling is performed for the attention head (head), the absence of the two operator types may cause an excessively large difference between a structure of a found attention head (head) and the existing attention head (head). On one hand, it is difficult to sample an attention head (head) structure with excellent performance. On the other hand, it also increases time and computing overheads of a search process.

In a possible implementation, the target attention head may be constructed by sampling the candidate operators in the first search space. Specifically, the plurality of operators and the connection relationship between the plurality of operators may be sampled from the first search space. In other words, when the target attention head is constructed, the type of each operator, the quantity of operators, and the connection relationship between the operators that are included in the target attention head may be determined in the sampling manner. Further, the target attention head (head) may be constructed based on the plurality of operators obtained through sampling and the sampled connection relationship between the plurality of operators.

Compared with the operator types of the existing attention head, the types of the foregoing candidate operators are more abundant, which greatly increases the structure type of the candidate transformer layer, and further increases the possibility of finding the transformer model with better performance.

In a possible implementation, the target attention head further includes a first linear transformation layer, the first linear transformation layer is used to process an input vector of the target attention head by using a target transformation matrix, and the plurality of operators are used to perform an operation on a data processing result of the first linear transformation layer.

In a possible implementation, the target transformation matrix includes only X transformation matrices, X is a positive integer less than or equal to 4, and a quantity of X is determined in a sampling manner.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, a matrix type of a transformation matrix included in the target transformation matrix may be determined in a sampling manner, where the matrix type is the Q transformation matrix, the K transformation matrix, or the V transformation matrix, or the matrix type of the transformation matrix included in the target transformation matrix is preset. This is not limited herein. When the matrix type of the transformation matrix included in the target transformation matrix is determined in the sampling manner, a possibility of the structure of the target attention head (head) can be increased, and a model with better performance can be found. In a possible implementation, the target attention head further includes a second linear transformation layer, and the second linear transformation layer is used to perform linear transformation on the data processing result of the plurality of operators, to obtain an output vector of the target attention head.

In a possible implementation, sizes of the input vector of the target attention head and the output vector of the target attention head are the same.

When search is performed only for an attention head (head) in a transformer layer to re-determine a structure, to ensure that work of another network layer of the transformer layer is not affected, a relationship characteristic between an input and an output of the attention head (head) in the conventional technology may be retained. In other words, it is ensured that the input vector of the target attention head and the output vector of the target attention head have the same size. In the foregoing manner, costs of adaptive modification at the another network layer of the transformer layer are reduced, thereby improving network search efficiency.

In a possible implementation, the quantity of operators included in the target attention head is less than a preset value. For example, the preset value may be 10, 11, 12, 14, 15, 20, or 21.

In a process of searching for an attention head (head), an upper limit of a sampled quantity of operators is set, to ensure that a size of a found network is not excessively large, and further, a model with good performance on a premise that a specific model size constraint is met can be found.

In a possible implementation, the target transformer layer in the transformer model may be constructed in a manner of operator sampling. Specifically, the target attention head (head) in the target transformer layer in the transformer model may be constructed in the manner of operator sampling. The target transformer layer may include a plurality of attention heads (heads), and the target attention head (head) may be any one of the plurality of attention heads (heads). Optionally, structures of all attention heads (heads) in the plurality of attention heads (heads) are the same.

In a possible implementation, the at least one candidate neural network includes a plurality of network layers connected in series, the plurality of network layers include the target transformer layer, and a location of the target transformer layer in the plurality of network layers is determined in a sampling manner.

Compared with network layer types of network layers connected in series in an existing transformer model, the network type of the network layer determined in the sampling manner (for example, the target transformer layer or the subsequent target network layer) can greatly increase the structure type of the candidate transformer layer, and the possibility of finding the transformer model with better performance is further increased.

In a possible implementation, the at least one candidate neural network includes the plurality of network layers connected in series, the plurality of network layers include the target transformer layer and the target network layer, and the target network layer includes a convolutional layer. A convolution kernel in the convolutional layer may be obtained by sampling convolution kernels of a plurality of sizes included in a second search space.

In a possible implementation, it may be determined, in the sampling or fixed setting manner, that the type of the network layer in the candidate neural network is the target network layer including the convolutional layer, and a size of the convolution kernel in the convolution layer in the target network layer is determined through sampling from the second search space.

In this embodiment of this application, diversified search spaces are designed, and include both a local operator (the convolution kernel in the convolutional layer) operator and a global operator (an operator in the transformer layer). The global operator can construct a new attention mechanism in combination with a mathematical basic operator, and the local operator includes a plurality of convolution kernels of different sizes. The global operator and the local operator are combined, so that an association relationship between words or sentences can be captured more effectively, and performance of a found model can be improved. In addition, the neural network model in this embodiment of this application may be used as a pre-training model, and is applicable to a plurality of downstream tasks.

In a possible implementation, because lightweight convolution (lightweight convolution) achieves good performance on a series of natural language understanding tasks (such as machine translation), the convolution kernel may use a lightweight convolution architecture to improve model performance.

In a possible implementation, the target network layer further includes a first addition and normalization layer, a feed-forward layer (feed-forward net, FFN), and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN. In other words, an addition and normalization layer and an FFN in an existing transformer layer, and a residual connection architecture may be retained, and an attention head (head) is replaced with a convolutional layer, so that the target network layer in this embodiment of this application can be obtained. A type of the replaced convolution layer may be obtained by performing convolution kernel sampling in the second search space.

In a possible implementation, the plurality of candidate neural networks include a target candidate neural network; and the obtaining a plurality of candidate neural networks specifically includes: constructing a target attention head in the target candidate neural network; and
the constructing a target attention head in the target candidate neural network includes:

obtaining a first neural network, where the first neural network includes a first transformer layer, the first transformer layer includes a first attention head, and a plurality of operators included in the first attention head are obtained by sampling a plurality of candidate operators included in the first search space; and
determining replacement operators from M candidate operators based on positive impact on performance of the first neural network when target operators in the first attention head are replaced with the M candidate operators in the first search space; and replacing the target operators in the first attention head with the replacement operators, to obtain the target attention head.

In a possible implementation, the plurality of candidate neural networks may be constructed through sampling. To select a model with good performance, a quantity of sampled candidate neural networks is large. The performance of the plurality of candidate neural networks may be determined through training, and a specific quantity of networks are preliminarily selected from the plurality of candidate neural networks as parent networks based on the performance of the plurality of candidate neural networks. Then, operators in the parent networks can be replaced (if transformer layers are used, operators in attention heads (heads) are replaced. If target network layers are used, convolution kernels may be replaced), to obtain a plurality of sub-networks, the plurality of sub-networks are trained to determine performance of the plurality of sub-networks, the target neural network is determined from the plurality of sub-networks based on the performance of the plurality of sub-networks, and the target neural network is used as a search result of the neural network.

The foregoing initially constructed candidate neural network may be referred to as a second neural network, the parent network may be referred to as the first neural network, and the sub-network may be referred to as the candidate neural network.

In this embodiment of this application, a plurality of second neural networks may be obtained in a sampling manner (for details, refer to the descriptions of obtaining the candidate neural networks through sampling in the foregoing embodiment, and details are not described herein again), and the plurality of second neural networks are trained to obtain a plurality of trained second neural networks and performance of the plurality of trained second neural networks. Specifically, random parameter initialization may be performed on the plurality of second neural networks, and fast search training (for example, 4w steps of training) is performed on the plurality of second neural networks, to obtain the plurality of trained second neural networks. In addition, evaluation is performed on the plurality of trained second neural networks by using a GLUE task, to obtain the performance of the plurality of second neural networks, N optimal networks are selected as parent networks, and training parameters of the parent networks are stored. The N parent networks may include the first neural network. The first neural network may include the first transformer layer, the first transformer layer includes the first attention head, and the first attention head includes the target operators. Then, the replacement operators may be determined from the M candidate operators based on the positive impact on the performance of the first neural network when the target operators in the first attention head are replaced with the M candidate operators in the first search space, and the target operators in the first attention head are replaced with the replacement operators, to obtain the target attention head.

In a possible implementation, the obtaining a first neural network includes:

obtaining the plurality of second neural networks, and training the plurality of second neural networks to obtain the plurality of trained second neural networks and the performance of the plurality of trained second neural networks; and
selecting, from the plurality of trained second neural networks based on the performance of the plurality of trained second neural networks, N trained second neural networks whose performance meets a preset requirement, where the N trained second neural networks include the first neural network.

The target operator is used as an example. The target operator may be located at a target operator location of the second neural network. The target operator location may represent, to some extent, a location of a distance from an input of the head, and the target operator location may be related to a manner of representing a location between network operators in code. When positive impact is calculated, a manner of calculating a location of each operator in the second neural network is consistent with a manner of calculating the target operator location of the target operator in the second neural network, and each of the manners can express a degree of positive impact of a different location of the operator in the attention head (head) on model performance. When the positive impact is calculated, the positive impact on the performance of the first neural network may be determined based on an operator that is in each of the plurality of trained second neural networks and that is located at the target operator location and the performance of the plurality of trained second neural networks, and/or an occurrence frequency of the operator that is in each trained second neural network and that is located at the target operator location when the target operators in the first attention head are replaced with the M candidate operators in the first search space.

For example, the positive impact may be represented by using an upper confidence bound UCB (upper confidence bound), and a specific UCB score calculation manner may be as follows:

$$u_i = \mu_i + c\sqrt{\frac{2logN}{N_i}},$$

where
$\mu_i$ represents a score obtained by an operator i in a current location of a network structure, $N_i$ represents a quantity of times that the operator i is sampled in history (when the second neural network is sampled), and $N$ represents a quantity of times that all operators are sampled. When an operator is rarely sampled, a larger value is obtained in the right half of the formula, and the current operator is selected with a higher probability. It should be understood that after UCB scores of all operators at all locations are calculated, softmax calculation may be performed on these scores to obtain probability distribution. A probability is set to a probability that the operator i is activated at the current location.

In this embodiment of this application, operator replacement is performed by using the positive impact, so that search precision and search breadth of an algorithm can be balanced, and a local optimal network architecture can be avoided, and a better network architecture can be continuously found.

In a possible implementation, the method further includes:

performing parameter initialization on the target candidate neural network based on the first neural network, to obtain an initialized target candidate neural network, where an updatable parameter in the initialized target candidate neural network is obtained by performing parameter sharing on an updatable parameter at a same location in the first neural network; and

training the target candidate neural network on which parameter initialization is performed, to obtain performance of the target candidate neural network.

When a parameter of the attention head (head) is shared, an updatable parameter is a parameter in a transformation matrix in the attention head (head). When a parameter of the convolutional layer is shared, an updatable parameter is a convolution kernel. It should be understood that a corresponding parameter at a centralmost location of the convolution kernel may be selected for parameter sharing.

In this embodiment of this application, parameter initialization is performed in a parameter sharing manner, so that a search speed can be accelerated, repeated training can be avoided, and search efficiency can be greatly improved.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

According to a second aspect, this application provides a model providing method. The method includes:

receiving a performance requirement sent by a device side, where the performance requirement indicates a performance requirement of a neural network, and the performance requirement may include at least one of the following: data processing precision, a model size, and an implemented task type;

obtaining, from a plurality of candidate neural networks based on the performance requirement, a target neural network that meets the performance requirement, where at least one candidate neural network in the plurality of candidate neural networks includes a target transformer layer, the target transformer layer includes a target attention head (head), the target attention head includes a plurality of operators, and the plurality of operators are obtained by sampling a plurality of candidate operators included in a first search space; and

sending the target neural network to the device side.

In a possible implementation, the first search space includes the plurality of candidate operators, and the candidate operators are unary operators or binary operators. The target attention head is constructed based on the plurality of operators and an arrangement relationship between the plurality of operators, and the arrangement relationship between the plurality of operators is determined in a sampling manner.

In a possible implementation, the target attention head further includes a first linear transformation layer, the first linear transformation layer is used to process an input vector of the target attention head by using a target transformation matrix, and the plurality of operators are used to perform an operation on a data processing result of the first linear transformation layer. The target transformation matrix includes only X transformation matrices, X is a positive integer less than or equal to 4, and a quantity of X is determined in a sampling manner.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, the at least one candidate neural network includes a plurality of network layers connected in series, the plurality of network layers include the target transformer layer, and a location of the target transformer layer in the plurality of network layers is determined in a sampling manner.

In a possible implementation, the at least one candidate neural network includes the plurality of network layers connected in series, the plurality of network layers include the target transformer layer and a target network layer, and the target network layer includes a convolutional layer.

In a possible implementation, a location of the target network layer in the plurality of network layers is determined in a sampling manner.

In a possible implementation, a convolution kernel in the convolutional layer is obtained by sampling convolution kernels of a plurality of sizes included in a second search space.

In a possible implementation, a type of the convolution kernel in the convolutional layer is lightweight convolution (lightweight convolution).

According to a third aspect, this application provides a neural network search method. The method includes:

obtaining a plurality of candidate neural networks, where at least one candidate neural network includes a plurality of network layers connected in series, the plurality of network layers include a target transformer layer and a target network layer, the target network layer includes a convolutional layer, and a convolution kernel in the convolution layer is obtained by sampling convolution kernels of a plurality of sizes included in a second search space; and selecting a target neural network from the plurality of candidate neural networks based on performance of the plurality of candidate neural networks.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

According to a fourth aspect, this application provides a data processing method. The method includes:

obtaining a target neural network, where the target neural network includes a plurality of serial network layers, the plurality of network layers include a target transformer layer and a target network layer, and the target network layer includes a convolutional layer; and

obtaining to-be-processed data, and processing the to-be-processed data by using the target neural network, to obtain a data processing result.

In a possible implementation, the target transformer layer includes a target attention head (head), the target attention head includes a plurality of operators, and the plurality of operators are unary operators or binary operators.

In a possible implementation, the target attention head includes the plurality of operators, and the plurality of operators are obtained by sampling a plurality of candidate operators included in a first search space.

In a possible implementation, the target attention head further includes a first linear transformation layer, the first linear transformation layer is used to process an input vector of the target attention head by using a target transformation matrix, and the plurality of operators are used to perform an operation on the data processing result of the first linear transformation layer.

In a possible implementation, the target transformation matrix includes only X transformation matrices, and X is a positive integer less than or equal to 4.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, a quantity of X is determined in a sampling manner. Specifically, a matrix type of a transformation matrix included in the target transformation matrix may be determined in a sampling manner, where the matrix type is the Q transformation matrix, the K transformation matrix, or the V transformation matrix, or the matrix type of the transformation matrix included in the target transformation matrix is preset. This is not limited herein. When the matrix type of the transformation matrix included in the target transformation matrix is determined in the sampling manner, a possibility of a structure of the target attention head (head) can be increased, and a model with better performance can be found.

In a possible implementation, the target attention head further includes a second linear transformation layer, and the second linear transformation layer is used to perform linear transformation on the data processing result of the plurality of operators, to obtain an output vector of the target attention head.

In a possible implementation, sizes of the input vector of the target attention head and the output vector of the target attention head are the same.

In a possible implementation, a quantity of operators included in the target attention head is less than a preset value. For example, the preset value may be 10, 11, 12, 14, 15, 20, or 21.

In a possible implementation, the target transformer layer may include a plurality of attention heads (heads), and the target attention head (head) may be any one of the plurality of attention heads (heads). Optionally, structures of all attention heads (heads) in the plurality of attention heads (heads) are the same.

In a possible implementation, a location of the target transformer layer in the plurality of network layers is determined in a sampling manner.

In a possible implementation, a convolution kernel in the convolutional layer may be obtained by sampling convolution kernels of a plurality of sizes included in a second search space.

In a possible implementation, the convolutional layer is included in the target network layer in the plurality of network layers, and the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, a location of the target network layer in the plurality of network layers is determined in a sampling manner.

According to a fifth aspect, this application provides a model providing method. The method includes:

receiving a performance requirement sent by a device side, where the performance requirement indicates a performance requirement of a neural network, and the performance requirement may include at least one of the following: data processing precision, a model size, and an implemented task type;

obtaining, from a plurality of candidate neural networks based on the performance requirement, a target neural network that meets the performance requirement, where the target neural network includes a target transformer layer and a target network layer, the target network layer includes a convolutional layer, and a convolution kernel in the convolution layer is obtained by sampling convolution kernels of a plurality of sizes included in a second search space; and

sending the target neural network to the device side.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

According to a sixth aspect, a neural network search apparatus is provided. The apparatus includes:

an obtaining module, configured to obtain a plurality of candidate neural networks, where at least one candidate neural network in the plurality of candidate neural networks includes a target transformer layer, the target transformer layer includes a target attention head (head), the target attention head includes a plurality of operators, and the plurality of operators are obtained by sampling a plurality of candidate operators included in a first search space; and

a model selection module, configured to select a target neural network from the plurality of candidate neural networks based on performance of the plurality of candidate neural networks.

In a possible implementation, the first search space includes the plurality of candidate operators, and the candidate operators are unary operators or binary operators. The unary operator (unary operation) refers to performing an operation on only one piece of data, for example, a negative (neg) number operation, a square root (sqrt) operation, a transpose (transpose) operation, a softmax operation, a logsigmoid operation, and a softsign operation. The binary operator (binary operation) refers to a rule for performing an operation on two pieces of data to obtain a third piece of data, for example, an add (add) operation, a dot multiplication (matmul) operation, a cosine similarity operation, and a euclidean distance operation.

In a possible implementation, the plurality of candidate operators include a softmax operator and a dot multiplication operator.

In a possible implementation, the target attention head may be constructed by sampling the candidate operators in the first search space. Specifically, the plurality of operators and the connection relationship between the plurality of operators may be sampled from the first search space. In other words, when the target attention head is constructed, the type of each operator, the quantity of operators, and the connection relationship between the operators that are included in the target attention head may be determined in the sampling manner. Further, the target attention head (head) may be constructed based on the plurality of operators obtained through sampling and the sampled connection relationship between the plurality of operators.

In a possible implementation, the target attention head further includes a first linear transformation layer, the first linear transformation layer is used to process an input vector of the target attention head by using a target transformation matrix, and the plurality of operators are used to perform an operation on the data processing result of the first linear transformation layer.

In a possible implementation, the target transformation matrix includes only X transformation matrices, X is a positive integer less than or equal to 4, and a quantity of X is determined in a sampling manner.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, the target attention head further includes a second linear transformation layer, and the second linear transformation layer is used to perform linear transformation on the data processing result of the plurality of operators, to obtain an output vector of the target attention head.

In a possible implementation, sizes of the input vector of the target attention head and the output vector of the target attention head are the same.

In a possible implementation, the quantity of operators included in the target attention head is less than a preset value.

In a possible implementation, the target transformer layer in the transformer model may be constructed in a manner of operator sampling. Specifically, the target attention head (head) in the target transformer layer in the transformer model may be constructed in the manner of operator sampling. The target transformer layer may include a plurality of attention heads (heads), and the target attention head (head) may be any one of the plurality of attention heads (heads). Optionally, structures of all attention heads (heads) in the plurality of attention heads (heads) are the same.

In a possible implementation, the at least one candidate neural network includes a plurality of network layers connected in series, the plurality of network layers include the target transformer layer, and a location of the target transformer layer in the plurality of network layers is determined in a sampling manner.

In a possible implementation, the at least one candidate neural network includes the plurality of network layers connected in series, the plurality of network layers include the target transformer layer and a target network layer, and the target network layer includes a convolutional layer. A convolution kernel in the convolutional layer may be obtained by sampling convolution kernels of a plurality of sizes included in a second search space.

In a possible implementation, it may be determined, in the sampling or fixed setting manner, that the type of the network layer in the candidate neural network is the target network layer including the convolutional layer, and a size of the convolution kernel in the convolution layer in the target network layer is determined through sampling from the second search space.

In this embodiment of this application, diversified search spaces are designed, and include both a local operator (the convolution kernel in the convolutional layer) operator and a global operator (an operator in the transformer layer). The global operator can construct a new attention mechanism in combination with a mathematical basic operator, and the local operator includes a plurality of convolution kernels of different sizes. The global operator and the local operator are combined, so that an association relationship between words or sentences can be captured more effectively, and performance of a found model can be improved. In addition, the neural network model in this embodiment of this application may be used as a pre-training model, and is applicable to a plurality of downstream tasks.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN. In other words, an addition and normalization layer and an FFN in an existing transformer layer, and a residual connection architecture may be retained, and an attention head (head) is replaced with a convolutional layer, so that the target network layer in this embodiment of this application can be obtained. A type of the replaced convolution layer may be obtained by performing convolution kernel sampling in the second search space.

In a possible implementation, the plurality of candidate neural networks include a target candidate neural network; and the obtaining module is specifically configured to: construct a target attention head in the target candidate neural network; and

the constructing a target attention head in the target candidate neural network includes:

> obtaining a first neural network, where the first neural network includes a first transformer layer, the first transformer layer includes a first attention head, and a plurality of operators included in the first attention head are obtained by sampling a plurality of candidate operators included in the first search space; and
> determining replacement operators from M candidate operators based on positive impact on performance of the first neural network when target operators in the first attention head are replaced with the M candidate operators in the first search space; and replacing the target operators in the first attention head with the replacement operators, to obtain the target attention head.

In a possible implementation, the obtaining module is specifically configured to:

> obtain the plurality of second neural networks, and train the plurality of second neural networks to obtain the plurality of trained second neural networks and the performance of the plurality of trained second neural networks; and
> select, from the plurality of trained second neural networks based on the performance of the plurality of trained second neural networks, N trained second neural networks whose performance meets a preset requirement, where the N trained second neural networks include the first neural network.

In a possible implementation, the target operator is located at a target operator location of the second neural network; and the apparatus further includes:

a determining module, configured to determine, based on an operator that is in each of the plurality of trained second neural networks and that is located at the target operator location and the performance of the plurality of trained second neural networks, and/or an occurrence frequency of the operator that is in each trained second neural network and that is located at the target operator location, the positive impact on the performance of the first neural network when the target operators in the first attention head are replaced with the M candidate operators in the first search space.

In a possible implementation, the apparatus further includes:

> a parameter initialization module, configured to perform parameter initialization on the target candidate neural network based on the first neural network, to obtain an initialized target candidate neural network, where an updatable parameter in the initialized target candidate neural network is obtained by performing parameter sharing on an updatable parameter at a same location in the first neural network; and
> a model training module, configured to train the target candidate neural network on which parameter initialization is performed, to obtain performance of the target candidate neural network.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

According to a seventh aspect, this application provides a model providing apparatus. The apparatus includes:

> a receiving module, configured to receive a performance requirement sent by a device side, where the performance requirement indicates a performance requirement of a neural network, and the performance requirement may include at least one of the following: data processing precision, a model size, and an implemented task type;
> an obtaining module, configured to obtain, from a plurality of candidate neural networks based on the performance requirement, a target neural network that meets the performance requirement, where the target neural network includes a target transformer layer, the target transformer layer includes a target attention head (head), the target attention head includes a plurality of operators, and the plurality of operators are obtained by sampling a plurality of candidate operators included in a first search space; and

a sending module, configured to send the target neural network to the device side.

In a possible implementation, the candidate operators are unary operators or binary operators. The target attention head is constructed based on the plurality of operators and an arrangement relationship between the plurality of operators, and the arrangement relationship between the plurality of operators is determined in a sampling manner.

In a possible implementation, the target attention head further includes a first linear transformation layer, the first linear transformation layer is used to process an input vector of the target attention head by using a target transformation matrix, and the plurality of operators are used to perform an operation on a data processing result of the first linear transformation layer. The target transformation matrix includes only X transformation matrices, X is a positive integer less than or equal to 4, and a quantity of X is determined in a sampling manner.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, the at least one candidate neural network includes a plurality of network layers connected in series, the plurality of network layers include the target transformer layer, and a location of the target transformer layer in the plurality of network layers is determined in a sampling manner.

In a possible implementation, the at least one candidate neural network includes the plurality of network layers connected in series, the plurality of network layers include the target transformer layer and a target network layer, and the target network layer includes a convolutional layer.

In a possible implementation, a location of the target network layer in the plurality of network layers is determined in a sampling manner.

In a possible implementation, a convolution kernel in the convolutional layer is obtained by sampling convolution kernels of a plurality of sizes included in a second search space.

In a possible implementation, a type of the convolution kernel in the convolutional layer is lightweight convolution (lightweight convolution).

According to an eighth aspect, this application provides a neural network search apparatus. The apparatus includes:

an obtaining module, configured to obtain a plurality of candidate neural networks, where at least one candidate neural network includes a plurality of network layers connected in series, the plurality of network layers include a target transformer layer and a target network layer, the target network layer includes a convolutional layer, and a convolution kernel in the convolution layer is obtained by sampling convolution kernels of a plurality of sizes included in a second search space; and

a model selection module, configured to select a target neural network from the plurality of candidate neural networks based on performance of the plurality of candidate neural networks.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

According to a ninth aspect, this application provides a data processing apparatus. The apparatus includes:

an obtaining module, configured to obtain a target neural network, where the target neural network includes a plurality of serial network layers, the plurality of network layers include a target transformer layer and a target network layer, and the target network layer includes a convolutional layer; and the obtaining module is further configured to obtain to-be-processed data; and

a data processing module, configured to process the to-be-processed data by using the target neural network, to obtain a data processing result.

In a possible implementation, the target transformer layer includes a target attention head (head), the target attention head includes a plurality of operators, and the plurality of operators are unary operators or binary operators.

In a possible implementation, the target attention head includes the plurality of operators, and the plurality of operators are obtained by sampling a plurality of candidate operators included in a first search space.

In a possible implementation, the target attention head further includes a first linear transformation layer, the first linear transformation layer is used to process an input vector of the target attention head by using a target transformation matrix, and the plurality of operators are used to perform an operation on the data processing result of the first linear transformation layer.

In a possible implementation, the target transformation matrix includes only X transformation matrices, and X is a positive integer less than or equal to 4.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, a quantity of X is determined in a sampling manner. Specifically, a matrix type of a transformation matrix included in the target transformation matrix may be determined in a sampling manner, where the matrix type is the Q transformation matrix, the K transformation matrix, or the V transformation matrix, or the matrix type of the transformation matrix included in the target transformation matrix is preset. This is not limited herein. When the matrix type of the transformation matrix included in the target transformation matrix is determined in the sampling manner, a possibility of the structure of the target attention head (head) can be increased, and a model with better performance can be found.

In a possible implementation, the target attention head further includes a second linear transformation layer, and the second linear transformation layer is used to perform linear transformation on the data processing result of the plurality of operators, to obtain an output vector of the target attention head.

In a possible implementation, sizes of the input vector of the target attention head and the output vector of the target attention head are the same.

In a possible implementation, a quantity of operators included in the target attention head is less than a preset value. For example, the preset value may be 10, 11, 12, 14, 15, 20, or 21.

In a possible implementation, the target transformer layer may include a plurality of attention heads (heads), and the target attention head (head) may be any one of the plurality of attention heads (heads). Optionally, structures of all attention heads (heads) in the plurality of attention heads (heads) are the same.

In a possible implementation, a location of the target transformer layer in the plurality of network layers is determined in a sampling manner.

In a possible implementation, a convolution kernel in the convolutional layer may be obtained by sampling convolution kernels of a plurality of sizes included in a second search space.

In a possible implementation, the convolutional layer is included in the target network layer in the plurality of network layers, and the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, a location of the target network layer in the plurality of network layers is determined in a sampling manner.

According to a tenth aspect, this application provides a model providing apparatus. The apparatus includes:

a receiving module, configured to receive a performance requirement sent by a device side, where the performance requirement indicates a performance requirement of a neural network, and the performance requirement may include at least one of the following: data processing precision, a model size, and an implemented task type;

an obtaining module, configured to obtain, from a plurality of candidate neural networks based on the performance requirement, a target neural network that meets the performance requirement, where the target neural network includes a target transformer layer and a target network layer, the target network layer includes a convolutional layer, and a convolution kernel in the convolution layer is obtained by sampling convolution kernels of a plurality of sizes included in a second search space; and

a sending module, configured to send the target neural network to the device side.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

According to an eleventh aspect, an embodiment of this application provides a neural network search apparatus, which may include a memory, a processor, and a bus system. The memory is configured to store a program, and the processor is configured to execute the program in the memory, to perform the method according to any one of the first aspect and the optional implementations of the first aspect and the method according to any one of the third aspect and the optional implementations of the third aspect.

According to a twelfth aspect, an embodiment of this application provides a model providing apparatus, which may include a memory, a processor, and a bus system. The memory is configured to store a program, and the processor is configured to execute the program in the memory, to perform the method according to any one of the second aspect and the optional implementations of the second aspect and the method according to any one of the fifth aspect and the optional implementations of the fifth aspect.

According to a thirteenth aspect, an embodiment of this application provides a data processing apparatus, which may include a memory, a processor, and a bus system. The memory is configured to store a program, and the processor is configured to execute the program in the memory, to perform the method according to any one of the fourth aspect and the optional implementations of the fourth aspect.

According to a fourteenth aspect, an embodiment of this application provides a computer-readable storage medium. The computer-readable storage medium stores a computer program. When the computer-readable storage medium runs on a computer, the computer is enabled to perform the method according to any one of the first aspect and the optional implementations of the first aspect, the method according to any one of the second aspect and the optional implementations of the second aspect, the method according to any one of the third aspect and the optional implementations of the third aspect, the method according to any one of the fourth aspect and the optional implementations of the fourth aspect, and the method according to any one of the fifth aspect and the optional implementations of the fifth aspect.

According to a fifteenth aspect, an embodiment of this application provides a computer program. When the computer program is run on a computer, the computer is enabled to perform the method according to any one of the first aspect and the optional implementations of the first aspect, the method according to any one of the second aspect and the optional implementations of the second aspect, the method according to any one of the third aspect and the optional implementations of the third aspect, the method according to any one of the fourth aspect and the optional implementations of the fourth aspect, and the method according to any one of the fifth aspect and the optional implementations of the fifth aspect.

According to a sixteenth aspect, this application provides a chip system. The chip system includes a processor, configured to support an execution device or a training device in implementing a function in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

Embodiments of this application provide the neural network search method. The method includes: obtaining the plurality of candidate neural networks, where the at least one candidate neural network in the plurality of candidate neural networks includes the target transformer layer, the target transformer layer includes the target attention head (head), the target attention head includes the plurality of operators, and the plurality of operators are obtained by sampling the plurality of candidate operators included in the first search space; and selecting the target neural network from the plurality of candidate neural networks based on the performance of the plurality of candidate neural networks. In the foregoing manner, combined with model search, the new attention structure that is stronger than the original self-attention mechanism can be generated, and the effect in the wide range of downstream tasks is significantly improved.

It should be understood that the methods and apparatuses described in the foregoing aspects may be mutually referenced, combined, and explained without technical contradiction.

## BRIEF DESCRIPTION OF DRAWINGS

FIG. 1 is a schematic diagram of a structure of an artificial intelligence main framework;
FIG. 2 is a neural network search system;
FIG. 3 is a neural network search system;
FIG. 4 is a neural network search system;
FIG. 5 is a neural network search system;
FIG. 6 is a natural language processing system;
FIG. 7 is a natural language processing system;
FIG. 8 is a schematic diagram of a device related to natural language processing according to an embodiment of this application;
FIG. 9 is a schematic diagram of a convolutional neural network;
FIG. 10 is a schematic diagram of a convolutional neural network;
FIG. 11 is a schematic diagram of a structure of a system architecture according to an embodiment of this application;
FIG. 12 is a schematic diagram of an embodiment of a neural network search method according to an embodiment of this application;
FIG. 13 is a schematic diagram of a structure of a transformer model;
FIG. 14 is a schematic diagram of a structure of a transformer layer;
FIG. 15 is a schematic diagram of a structure of a target attention head according to an embodiment of this application;
FIG. 16 to FIG. 21 are schematic diagrams of structures of a target attention head (head) obtained in a sampling manner;
FIG. 22 is a schematic diagram of a structure of a candidate neural network;
FIG. 23 is a schematic diagram of a target network layer according to an embodiment of this application;
FIG. 24 is a schematic diagram of parameter sharing according to an embodiment of this application;
FIG. 25 is a schematic diagram of parameter sharing according to an embodiment of this application;
FIG. 26A to FIG. 26C are a network architecture search result obtained based on a neural network search algorithm according to an embodiment of this application;
FIG. 27 is a schematic diagram of an embodiment of a model providing method according to an embodiment of this application;
FIG. 28 is a schematic diagram of an embodiment of a neural network search method according to an embodiment of this application;
FIG. 29 is a schematic diagram of an embodiment of a model providing method according to an embodiment of this application;
FIG. 30 is a schematic diagram of an embodiment of a neural network search apparatus according to an embodiment of this application;
FIG. 31 is a schematic diagram of an embodiment of a model providing apparatus according to an embodiment of this application;
FIG. 32 is a schematic diagram of an embodiment of a neural network search apparatus according to an embodiment of this application;
FIG. 33 is a schematic diagram of an embodiment of a model providing apparatus according to an embodiment of this application;
FIG. 34 is a schematic diagram of a structure of an execution device according to an embodiment of this application;
FIG. 35 is a schematic diagram of a structure of a training device according to an embodiment of this application; and
FIG. 36 is a schematic diagram of a structure of a chip according to an embodiment of this application.

## DESCRIPTION OF EMBODIMENTS

The following describes embodiments of the present invention with reference to accompanying drawings in embodiments of the present invention. Terms used in implementations of the present invention are merely used to explain specific embodiments of the present invention, but are not intended to limit the present invention.

The following describes embodiments of this application with reference to the accompanying drawings. A person of ordinary skill in the art may learn that, with development of technologies and emergence of new scenarios, technical solutions provided in embodiments of this application are also applicable to a similar technical problem.

In the specification, claims, and the accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

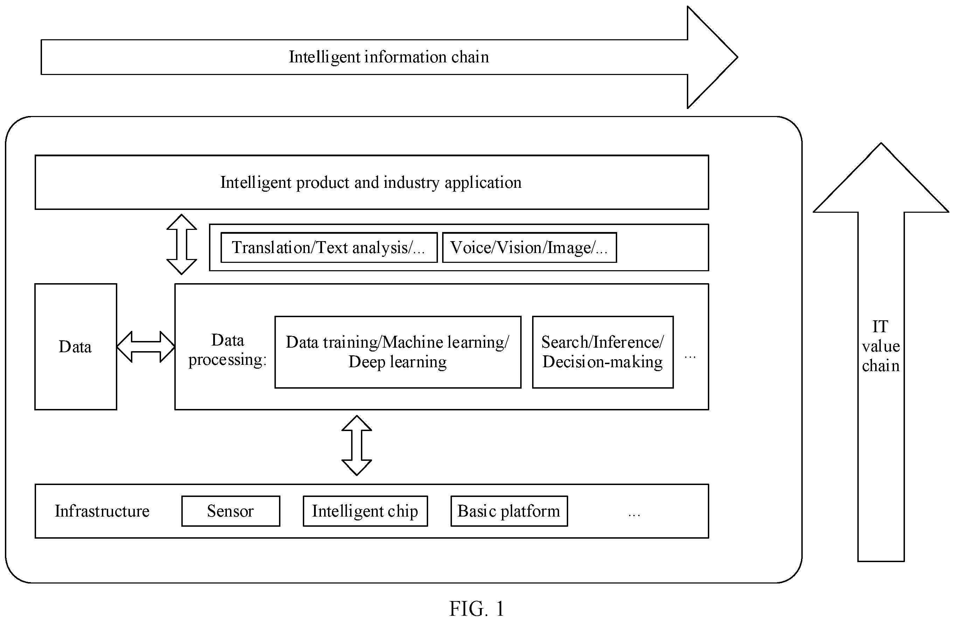

An overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the processes may be general processes of intelligent information perception, intelligent information representation and formation, intelligent inference, intelligent decision-making, and intelligent execution and output. In these processes, the data undergoes a refinement process of "data-information-knowledge-intelligence". The "IT value chain" reflects a value brought by artificial intelligence to the information technology industry from an industrial ecology process of underlying infrastructure, information (providing and processing technology implementation), and a system of artificial intelligence.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to graphics, images, speech, and text, and further relates to internet of things data of conventional devices, and includes service data of a conventional system and perception data such as force, displacement, a liquid level, a temperature, and humidity.

(3) Data processing

Data processing usually includes a manner such as data training, machine learning, deep learning, search, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formatted information according to an inference control policy. A typical function is search and matching.

Decision-making is a process in which a decision is made after intelligent information is inferred, and usually provides functions such as classification, ranking, and prediction.

(4) General capability

After data processing mentioned above is performed on data, some general capabilities may further be formed based on a data processing result, for example, an algorithm or a general system, such as translation, text analysis, computer vision processing, speech recognition, and image recognition.

(5) Intelligent product and industry application

The intelligent product and the industry application are a product and an application of the artificial intelligence system in various fields, and are package of an overall solution of artificial intelligence, so that decision-making for intelligent information is productized and an application is implemented. Application fields mainly include an intelligent terminal, intelligent transportation, intelligent health care, autonomous driving, a safe city, and the like.

This application may be applied but is not limited to the natural language processing field in the artificial intelligence field, and may be specifically applied to fields such as neural network search in the natural language processing field and neural network inference in the natural language processing field. The following describes a plurality of application scenarios implemented in a product.

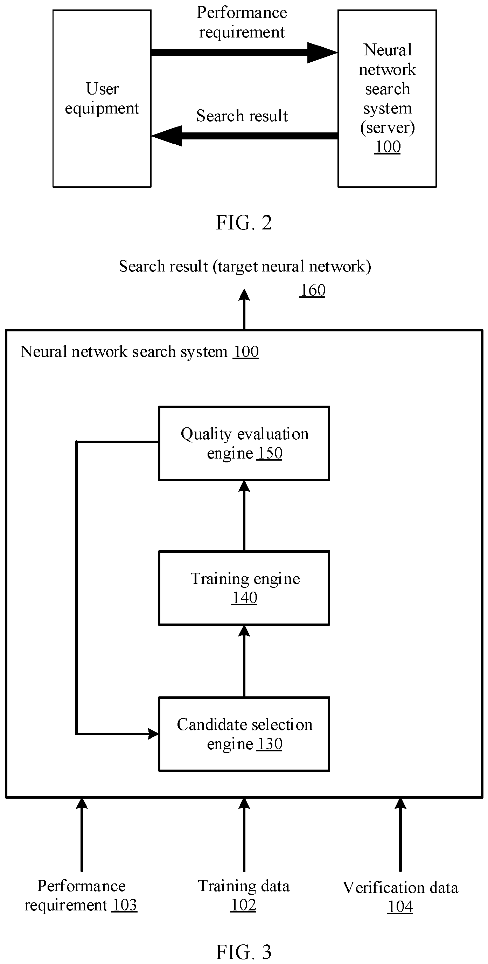

To better understand the solutions in embodiments of this application, the following briefly describes possible application scenarios of embodiments of this application with reference to FIG. 2 to FIG. 8.

Scenario 1: neural network search

Refer to FIG. 2. This application may be applied to a service related to neural network search, and may be specifically a neural network architecture search service provided by a cloud server. A user may transfer information related to model search to a cloud neural network search system (for example, the cloud server) by using user equipment. The information related to model search may be a performance requirement of the user for a searched model, or the like. Further, the cloud server may obtain a search result (for example, the target neural network in embodiments of this application) by using a neural network search algorithm based on the performance requirement uploaded by the user, and deliver the search result to the user equipment.

FIG. 3 shows a neural network search system 100. The system may obtain training data 102 for training a neural network, verification data 104 for evaluating performance of the neural network, and a performance requirement 103, and determine a search result 160 (for example, the target neural network in embodiments of this application) by using the training data 102, the verification data 104, and the performance requirement 103. The search result 160 is used to meet the performance requirement 103, to be specific, to receive an input and generate an output that meets the performance requirement 103. The search result 160 may be architecture information of the neural network, and the architecture information may define a quantity of layers of the neural network, an operation performed at each layer, and a connection between layers in the neural network, to be specific, which layers receive an input from another layer in the neural network.

The system 100 may receive the training data 102, the validation set 104, and the performance requirement 103 in any one of various ways. For example, the system 100 may, for example, upload and receive the training data and the performance requirement 103 from a remote user of the system over a data communication network by using an application programming interface (application programming interface, API) available to the system 100, and randomly divide uploaded data into the training data 102 and the validation set 104. For another example, the system 100 may receive an input that specifies which data already maintained by the system 100 should be used to train the neural network from a user, and then divide the specified data into the training data 102 and the validation set 104.

In general, the system 100 may determine the search result 160 by searching for a space of candidate architectures to identify one or more architectures with best performance. For example, as shown in FIG. 3, the system 100 may search for the space of the candidate architectures, construct a plurality of candidate neural network architectures (for example, the candidate neural networks in embodiments of this application) by using a candidate selection engine 130, and perform processing such as model training on the candidate neural network architectures by using a training engine 140. A quality evaluation engine 150 may evaluate training results to determine the search result 160.

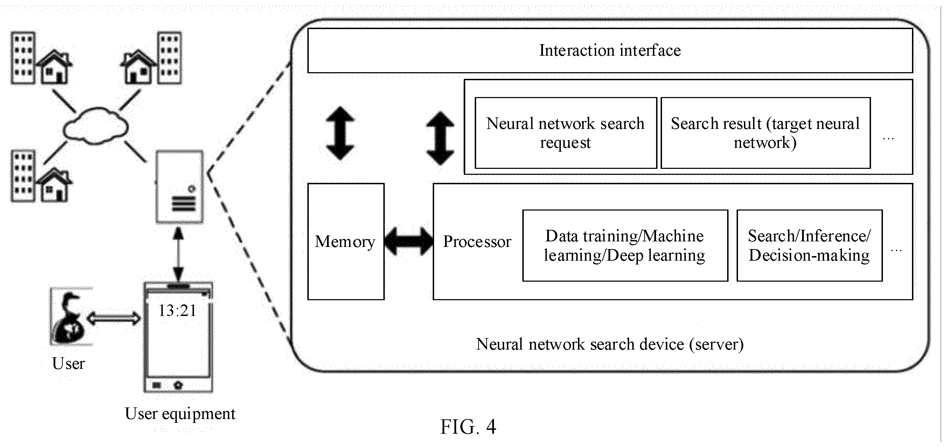

FIG. 4 shows a neural network search system. The neural network search system includes user equipment and a neural network search device. The user equipment includes an intelligent terminal such as a mobile phone, a personal computer, or an information processing center. The user equipment is an initiator of neural network search. Generally, a user initiates a neural network search request by using the user equipment.

The neural network search device may be a device or server that has a neural network search function, for example, a cloud server, a network server, an application server, or a management server. The neural network search device receives neural network search from the intelligent terminal through an interaction interface, performs neural network search in a manner such as machine learning, deep learning, search, inference, and decision-making by using a memory that stores data and a processor, and feeds back a search result (for example, the target neural network in embodiments of this application) to the user equipment. The memory in the neural network search device may be a general name, including a local storage and a database storing historical data. The database may be in a data processing device, or may be in another network server.

In the neural network search system shown in FIG. 4, the user equipment may receive an instruction from the user. For example, the user equipment may receive a model performance requirement for neural network search input by the user, and then initiate a request to the neural network search device.

In FIG. 4, the neural network search device may perform the neural network search method in embodiments of this application.

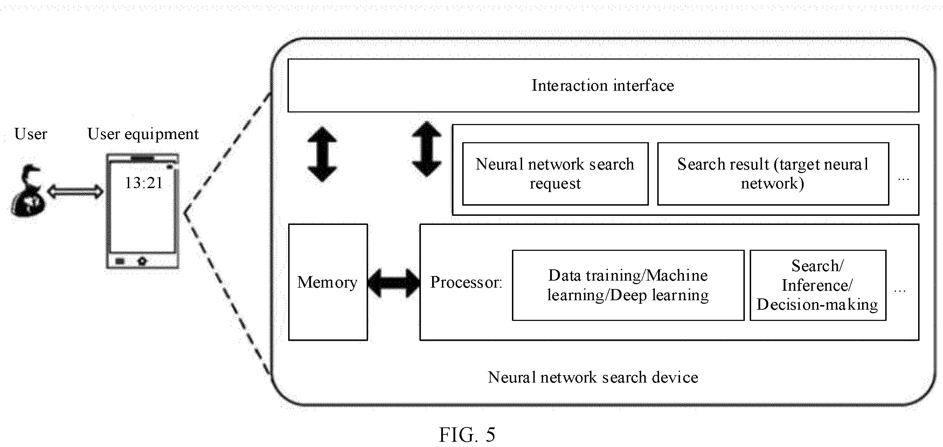

FIG. 5 shows another neural network search system. In FIG. 5, user equipment directly serves as a neural network search device. The user equipment can directly receive a model performance requirement for neural network search input by a user, and directly perform neural network search by using hardware of the user equipment. A specific process is similar to that in FIG. 4. Refer to the foregoing descriptions, and details are not described herein again.

In FIG. 5, the user equipment may perform the neural network search method in embodiments of this application.

Scenario 2: Natural language processing

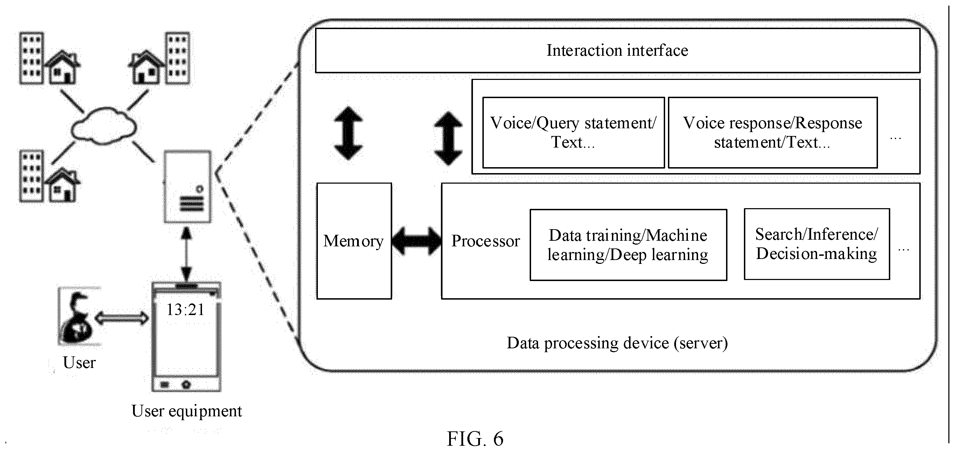

FIG. 6 shows a natural language processing system. The natural language processing system includes user equipment and a data processing device. The user equipment includes an intelligent terminal such as a mobile phone, a personal computer, or an information processing center. The user equipment is an initiator of natural language data processing. As an initiator of a request for language questioning/answering, querying, or the like, a user usually initiates the request by using the user equipment.

The data processing device may be a device or server that has a data processing function, for example, a cloud server, a network server, an application server, or a management server. The data processing device receives a query statement/voice/text (for example, the to-be-processed data in embodiments of this application) from the intelligent terminal through an interaction interface, then performs language data processing in a manner such as machine learning, deep learning, search, inference, and decision-making by using a memory that stores data and a processor for processing data (for example, data processing is performed by using the target neural network in embodiments of this application), and feeds back a processing result (for example, the data processing result in embodiments of this application) to the user equipment. The memory in the data processing device may be a general name, including a local storage and a database storing historical data. The database may be in the data processing device, or may be in another network server.

In the natural language processing system shown in FIG. 6, the user equipment may receive an instruction from the user. For example, the user equipment may receive a piece of text input by the user, and initiate a request to the data processing device. Then, the data processing device executes a natural language processing application (for example, text classification, text inference, named entity recognition, or translation) on the piece of text obtained by the user equipment, to obtain a processing result (for example, a classification result, an inference result, a named entity recognition result, or a translation result) corresponding to the natural language processing application for the piece of text. For example, the user equipment may receive a piece of Chinese text input by the user, and initiate a request to the data processing device. Then, the data processing device performs entity classification on the piece of Chinese text, to obtain an entity classification result for the piece of Chinese text. For example, the user equipment may receive a piece of Chinese text input by the user, and initiate a request to the data processing device. Then, the data processing device translates the piece of Chinese text into English, to obtain an English translation of the piece of Chinese text.

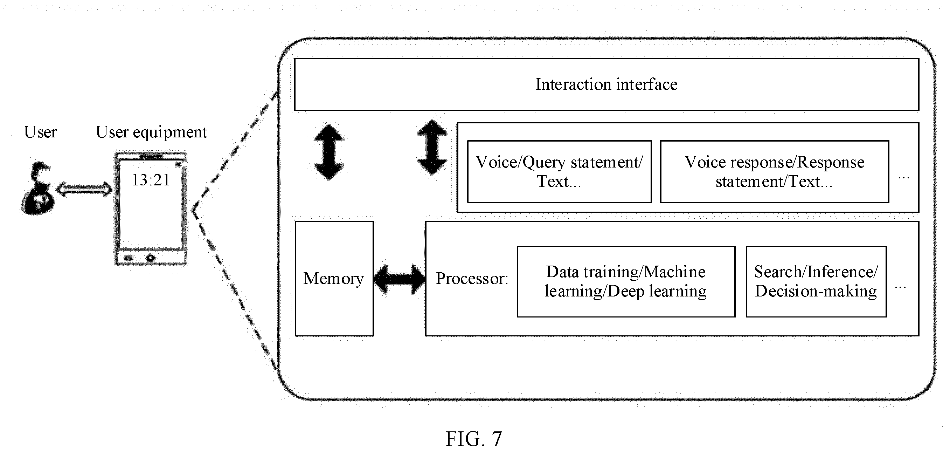

FIG. 7 shows another natural language processing system. In FIG. 7, user equipment directly serves as a data processing device. The user equipment can directly receive an input (for example, the to-be-processed data in embodiments of this application) from a user, and directly process the input (for example, the to-be-processed data in embodiments of this application) by using hardware of the user equipment. A specific process is similar to that in FIG. 6. Refer to the foregoing descriptions, and details are not described herein again.

In the natural language processing system shown in FIG. 7, the user equipment may receive an instruction from the user. For example, the user equipment may receive a piece of text input by the user, and then the user equipment executes a natural language processing application (for example, text classification, text inference, named entity recognition, or translation) on the piece of text, to obtain a processing result (for example, a classification result, an inference result, a named entity recognition result, or a translation result) corresponding to the natural language processing application for the piece of text. For example, the user equipment may receive a piece of Chinese text input by the user, and perform entity classification on the piece of Chinese text, to obtain an entity classification result for the piece of Chinese text. For example, the user equipment may receive a piece of Chinese text input by the user, and translate the piece of Chinese text into English, to obtain an English translation of the piece of Chinese text.

In this embodiment of this application, the user equipment may store a target neural network, and execute an inference task based on the target neural network each time an operating system (operating system, OS) or an application (application, APP) invokes a model.

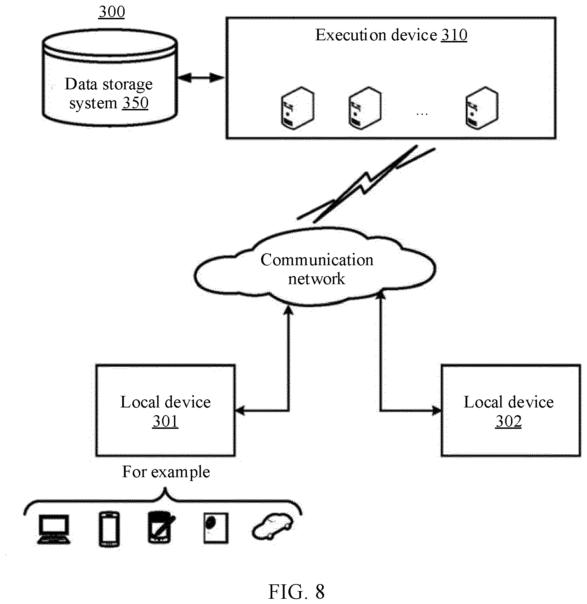

FIG. 8 is a schematic diagram of a natural language processing related device 300 according to an embodiment of this application.

The user equipment in FIG. 6 and FIG. 7 may be specifically a local device 301 or a local device 302 in FIG. 8. The data processing device in FIG. 6 may be specifically an execution device 310 in FIG. 8. A data storage system 350 may store to-be-processed data of the execution device 310. The data storage system 350 may be integrated on the execution device 310, or may be disposed on a cloud or another network server.

The processors in FIG. 6 and FIG. 7 may perform data training/machine learning/deep learning by using a neural network model or another model, and execute a natural language processing application (for example, text classification, sequence annotation, reading comprehension, text generation, text inference, or translation) on a text sequence by using a model obtained through training (for example, the target neural network in embodiments of this application), to obtain a corresponding processing result.

Because embodiments of this application relate to massive application of a neural network, for ease of understanding, the following first describes terms related to embodiments of this application and concepts related to the neural network and the like.

(1) Neural network

The neural network may include a neuron. The neuron may be an operation unit that uses xs and an intercept of 1 as an input. An output of the operation unit may be as follows:

Herein, s=1, 2, ..., n; n is a natural number greater than 1; Ws is a weight of xs; and b is a bias of the neuron. Herein, f indicates an activation function (activation function) of the neuron. The activation function is used for introducing a non-linear feature into the neural network, to convert an input signal in the neuron into an output signal. The output signal of the activation function may be used as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Transformer layer

The neural network may include an embedding layer and at least one transformer layer, and the at least one transformer layer may be N transformer layers (N is an integer greater than 0). Each transformer layer includes an attention layer, an addition and normalization (add&norm) layer, a feed-forward (feed-forward) layer, and an addition and normalization (add&norm) layer that are sequentially adjacent. At the embedding layer, embedding processing is performed on a current input to obtain a plurality of feature vectors. At the attention layer, P input vectors are obtained from a previous layer of a first transformer layer. An intermediate vector corresponding to any first input vector is obtained by using the first input vector in the P input vectors as a center and based on an association degree between each input vector within a preset attention window range and the first input vector. In this way, P intermediate vectors corresponding to the P input vectors are determined. At a pooling layer, the P intermediate vectors are merged into Q output vectors, where a plurality of output vectors obtained at a last transformer layer of transformer layers are used as feature representations of the current input.

The following describes the foregoing steps in detail with reference to specific examples.

First, at the embedding layer, embedding processing is performed on the current input, to obtain the plurality of feature vectors.

The embedding layer may be referred to as an input embedding (input embedding) layer. The current input may be a text input, for example, a section of text or a sentence. The text may be Chinese text, English text, or text in another language. After the current input is obtained, embedding processing may be performed on all words in the current input at the embedding layer, to obtain feature vectors of all the words. In some embodiments, as shown in FIG. 1, the embedding layer includes an input embedding layer and a positional encoding (positional encoding) layer. At the input embedding layer, word embedding processing may be performed on all the words in the current input, to obtain word embedding vectors of all the words. At the positional encoding layer, locations of all the words in the current input may be obtained, to generate location vectors for the locations of all the words. In some examples, the locations of all the words may be absolute locations of all the words in the current input. For example, the current input is "what date should the Ant Credit Pay be paid back". Herein, a position of "what" may be represented as a first position, a position of "date" may be represented as a second position, and the like. In some examples, the locations of all the words may be locations of all the words relative to each other. Still in the example in which the current input is "what date should the Ant Credit Pay be paid back", the position of "what" may be represented as before "date", and the position of "date" may be represented as after "what" and before "should", and the like. When the word embedding vectors and the location vectors of all the words in the current input are obtained, the location vectors of all the words and the corresponding word embedding vectors may be combined to obtain feature vectors of all the words, that is, obtain the plurality of feature vectors corresponding to the current input. The plurality of feature vectors may be represented as an embedding matrix with a preset dimension. For the plurality of feature vectors, a quantity of the feature vectors may be set to M, and the preset dimension may be a dimension of H. In this case, the plurality of feature vectors may be represented as an MxH embedding matrix.

Second, the P input vectors are obtained from the previous layer of the transformer layer. The intermediate vector corresponding to the any input vector is obtained by using the input vector in the P input vectors as the center and based on the association degree between each input vector within the preset attention window range and the input vector. In this way, the P intermediate vectors corresponding to the P input vectors are determined. The attention layer may also be referred to as a multi-head attention (multi-head attention) layer. In an example, the attention layer may be a fixed window multi-head attention (fixed window multi-head attention) layer.

In embodiments of this application, an architecture of the transformer layer is redesigned based on neural network search.

(3) Attention mechanism (attention mechanism)

The attention mechanism simulates an internal process of biological observation behavior, and is a mechanism that aligns internal experience with external feeling to increase observation precision of some regions. The mechanism can quickly select highly valuable information from a large amount of information by using limited attention resources. The attention mechanism is widely used in natural language processing tasks, especially machine translation, because the attention mechanism can quickly extract an important feature of sparse data. A self-attention mechanism (self-attention mechanism) is an improvement of the attention mechanism. The self-attention mechanism becomes less dependent on external information and is better at capturing an internal correlation of data or features. An essential idea of the attention mechanism can be expressed by using the following formula:

Herein, Lx=‖Source‖ represents a length of a source. A meaning of the formula is that a constituent element in the source is considered to constitute a series of data pairs. In this case, an element Query in a target Target is given; similarity or correlation between Query and each key is calculated, to obtain a weight coefficient of a value corresponding to each key; and then weighted summation is performed on values, to obtain a final attention value. Therefore, essentially, the attention mechanism is to perform weighted summation on values (Values) of the elements in the source. Herein, Query and the key are used to calculate a weight coefficient of a corresponding value. Conceptually, the attention mechanism may be understood as a mechanism for selecting a small amount of important information from a large amount of information, and focusing on the important information and ignoring most unimportant information. A focusing process is reflected in calculation of a weight coefficient. A larger weight indicates that a value (Value) corresponding to the weight is more focused on. In other words, the weight indicates importance of information, and the value indicates information corresponding to the value. The self-attention mechanism may be understood as an intra-attention (intra-attention) mechanism. The attention mechanism is used between the element Query in the target and each element in the source. The self-attention mechanism indicates an attention mechanism used between elements in the source or between elements in the target, and may also be understood as an attention calculation mechanism in a special case in which Target=Source. A specific calculation process of the self-attention mechanism is the same except that a calculation object changes.

(4) Natural language processing (natural language processing, NLP)

A natural language (natural language) is a human language. Natural language processing (NLP) is processing for the human language. Natural language processing is a process of performing systematic analysis, understanding, and information extraction on text data in an intelligent and efficient manner. By using NLP and components of NLP, large chunks of text data can be managed or a large quantity of automated tasks can be performed, and various problems can be resolved, for example, automatic summarization (automatic summarization), machine translation (machine translation, MT), named entity recognition (named entity recognition, NER), relation extraction (relation extraction, RE), information extraction (information extraction, IE), emotion analysis, speech recognition (speech recognition), a question answering (question answering) system, and topic segmentation.

For example, there may be the following types of natural language processing tasks.

Sequence labeling: A model needs to provide a classification category for each word in a sentence based on a context. For example, sequence labeling is Chinese word segmentation, part-of-speech tagging, named entity recognition, or semantic role labeling.

Classification task: A classification value is output for an entire sentence. For example, the classification task is text classification.

Sentence relation inference: Two sentences are given, and whether the two sentences have a nominal relation is determined. For example, sentence relation inference is entailment, QA, semantic paraphrasing, or natural language inference.

Generative task: One piece of text is output, and another piece of text is generated. For example, the generative task is machine translation, text summarization, poem writing and sentence making, or picture description.

The following provides some natural language processing examples.

Word segmentation (word segmentation or word breaker, WB): Continuous natural language text is segmented into lexical sequences with semantic plausibility and integrity, to eliminate a cross ambiguity.

Named entity recognition (named entity recognition, NER): Named entity recognition identifies entities (people, places, institutions, time, works, and the like) with specific meanings in natural language text.

Part-of-speech tagging (part-of-speech tagging): Apart of speech (noun, verb, adjective, or the like) is assigned to each word in natural language text. Dependency parsing (dependency parsing): Syntactic elements (subject, predicate, object, attributive, adverbial, complement, and the like) in a sentence are automatically analyzed, to eliminate a structural ambiguity.

Word vector and semantic similarity (word embedding & semantic similarity): Words are represented as vectors, and semantic similarity calculation is performed on the words based on the vectors, to solve a problem of linguistic similarity between the words.

Text semantic similarity (text semantic similarity): Based on massive data in an entire network and a deep neural network technology, semantic similarity between pieces of text is calculated, to solve a problem of text semantic similarity.

(5) A convolutional neural network (convolutional neuron network, CNN) is a deep neural network with a convolutional structure. The convolutional neural network includes a feature extractor that includes a convolutional layer and a sampling sublayer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons that are in a rectangular arrangement. Neurons at a same feature plane share a weight, and the weight shared herein is a convolution kernel. Weight sharing may be understood as that a feature extraction manner is irrelevant to a location. The convolution kernel may be initialized in a form of a matrix of a random size. In a training process of the convolutional neural network, an appropriate weight may be obtained for the convolution kernel through learning. In addition, benefits directly brought by weight sharing are that connections among layers of the convolutional neural network are reduced, and an overfitting risk is reduced.

The CNN is a very common neural network. As described in the foregoing basic concept description, the convolutional neural network is a deep neural network with a convolutional structure, and is a deep learning (deep learning) architecture. The deep learning architecture refers to performing multi-level learning at different abstract levels by using a machine learning algorithm. As a deep learning architecture, the CNN is a feed-forward (feed-forward) artificial neural network, and neurons in the feed-forward artificial neural network may respond to an input. A convolutional neural network (CNN) 200 may include an input layer 210, a convolutional layer/pooling layer 220 (where the pooling layer is optional), and a fully connected layer (fully connected layer) 230.

Convolutional layer/Pooling layer 220:

Convolutional layer:

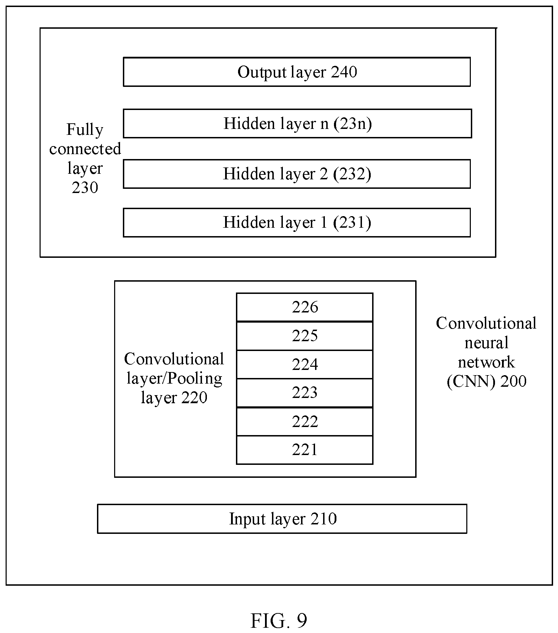

As shown in FIG. 9, for example, the convolutional layer/pooling layer 220 may include layers 221 to 226. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layer 221 and the layer 222 are convolutional layers, the layer 223 is a pooling layer, the layer 224 and the layer 225 are convolutional layers, and the layer 226 is a pooling layer. That is, an output of a convolutional layer may be used as an input of a subsequent pooling layer, or may be used as an input of another convolutional layer to continue a convolution operation.

The following uses the convolutional layer 221 as an example to describe an internal working principle of one convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. An image is used as an example (other data types are similar). In a process of performing a convolution operation on the image, the weight matrix is usually used to process pixels at a granularity level of one pixel (or two pixels, depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During the convolution operation, the weight matrix extends to an entire depth of the input image. Therefore, a convolutional output of a single depth dimension is generated through convolution with a single weight matrix. However, in most cases, the single weight matrix is not used, but a plurality of weight matrices with a same size (rows x columns), namely, a plurality of same-class matrices, are applied. An output of each weight matrix is stacked to form a depth dimension of a convolutional image, and it may be understood that the dimension herein depends on the foregoing "plurality of". Different weight matrices may be used to extract different features from the image. For example, one weight matrix is used to extract edge information of the image, another weight matrix is used to extract a specific color of the image, and a further weight matrix is used to blur unnecessary noise in the image. Sizes of the plurality of weight matrices (rows x columns) are the same. Sizes of feature maps extracted from the plurality of weight matrices with the same size are also the same, and then the plurality of extracted feature maps with the same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 has a plurality of convolutional layers, a large quantity of general features are usually extracted at an initial convolutional layer (for example, 221). The general feature may also be referred to as a low-level feature. As the depth of the convolutional neural network 200 increases, a feature extracted at a subsequent convolutional layer (for example, 226) becomes more complex, for example, a high-level semantic feature. A feature with higher semantics is more applicable to a to-be-resolved problem.

Pooling layer:

Because a quantity of training parameters usually needs to be reduced, a pooling layer usually needs to be periodically introduced after a convolutional layer. To be specific, for the layers 221 to 226 in the layer 220 shown in FIG. 9, one convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to sample the input image to obtain an image with a small size. The average pooling operator may be used to calculate pixel values in the image in a specific range, to generate an average value. The average value is used as an average pooling result. The maximum pooling operator may be used to select a pixel with a maximum value in a specific range as a maximum pooling result. In addition, similar to the case that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Fully connected layer 230:

After processing by the convolutional layer/pooling layer 220, the convolutional neural network 200 is insufficient to output required output information. As described above, at the convolutional layer/pooling layer 220, only a feature is extracted, and parameters resulting from an input image are reduced. However, to generate final output information (required class information or other related information), the convolutional neural network 200 needs to use the fully connected layer 230 to generate an output of one required class or outputs of a group of required classes. Therefore, the fully connected layer 230 may include a plurality of hidden layers (231 and 232 to 23n shown in FIG. 9). Parameters included in the plurality of hidden layers may be obtained through pre-training based on related training data of a specific task type. For example, the task type may include image recognition, image classification, super-resolution image reconstruction, and the like.

After the plurality of hidden layers in the fully connected layer 230, that is, the last layer of the entire convolutional neural network 200 is an output layer 240. The output layer 240 has a loss function similar to classification cross entropy, and is specifically used to calculate a prediction error. Once forward propagation (as shown in FIG. 9, propagation in a direction from 210 to 240 is forward propagation) of the entire convolutional neural network 200 is complete, back propagation (as shown in FIG. 9, propagation in a direction from 240 to 210 is reverse back propagation) starts to update a weight and a deviation of each layer mentioned above, to reduce a loss of the convolutional neural network 200 and an error between a result output by the convolutional neural network 200 by using the output layer and an ideal result.

It should be noted that the convolutional neural network 200 shown in FIG. 9 is merely used as an example of a convolutional neural network. In specific application, the convolutional neural network may alternatively exist in a form of another network model. For example, the convolutional neural network includes only a part of the network structure shown in FIG. 9. For example, the convolutional neural network used in embodiments of this application may include only the input layer 210, the convolutional layer/pooling layer 220, and the output layer 240.

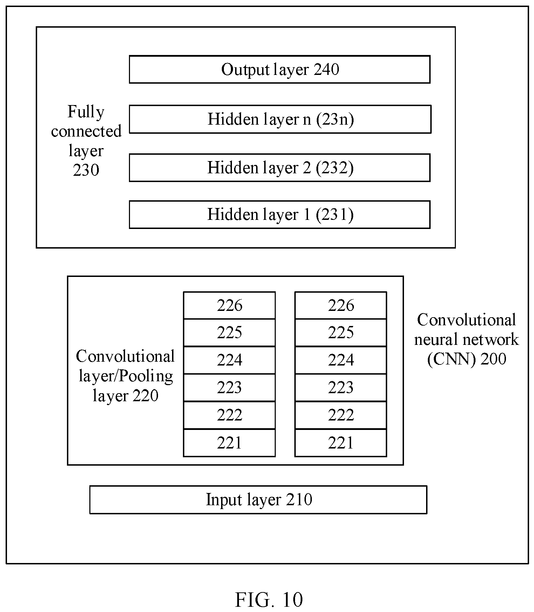

It should be noted that the convolutional neural network 100 shown in FIG. 9 is merely an example of a convolutional neural network. In specific application, the convolutional neural network may alternatively exist in a form of another network model. For example, a plurality of convolutional layers/pooling layers shown in FIG. 10 are parallel, and each of extracted features is input to a fully connected layer 230 for processing.

(6) Loss function

In a process of training a deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(7) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

The following describes a more detailed architecture of an execution body of the neural network search method in embodiments of this application.

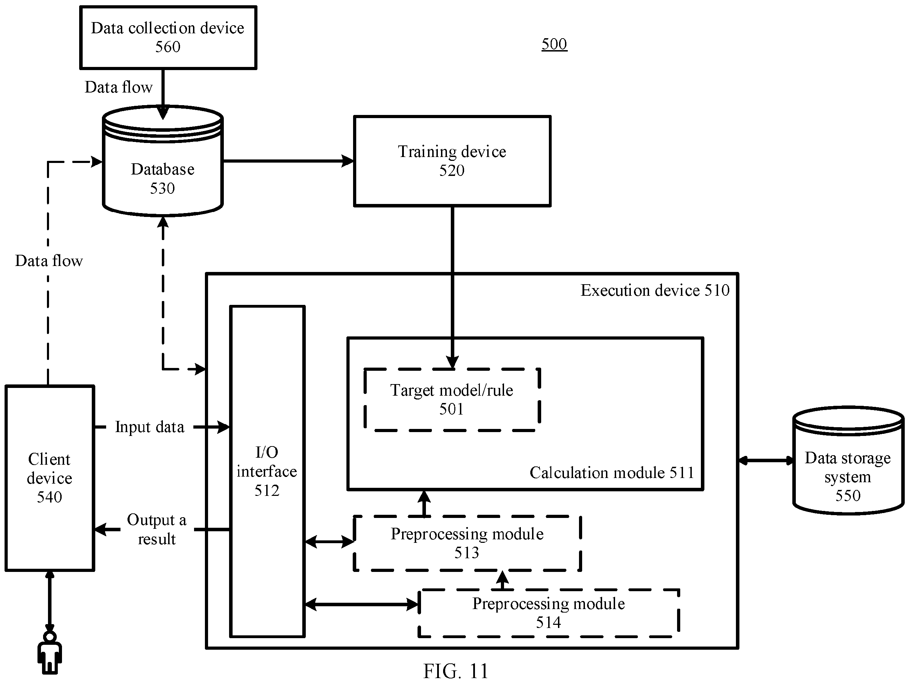

The following describes in detail a system architecture provided in embodiments of this application with reference to FIG. 11. FIG. 11 is a schematic diagram of a system architecture according to an embodiment of this application. As shown in FIG. 11, a system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional. The data collection device 560 is configured to collect training samples. The training sample may be image data, text data, audio data, or the like. In this embodiment of this application, the training sample is data used when a plurality of candidate neural networks are trained. After the training samples are collected, the data collection device 560 stores the training samples in the database 530.

It should be understood that the database 530 may further maintain a search space.

The training device 520 may construct the plurality of candidate neural networks based on the search space maintained in the database 530, and train the plurality of candidate neural networks based on the training samples, to find the target model/rule 501. In this embodiment of this application, the target model/rule 501 may be a target neural network.

It should be noted that, during actual application, the training samples maintained in the database 530 are not necessarily collected by the data collection device 560, but may be received from another device. In addition, it should be noted that the training device 520 may not train the target model/rule 501 completely based on the training samples maintained in the database 530, or may obtain the training samples from a cloud or another place to perform model training. The foregoing description should not be used as a limitation on this embodiment of this application.

The target model/rule 501 obtained through training by the training device 520 may be applied to different systems or devices, for example, applied to the execution device 510 shown in FIG. 11. The execution device 510 may be a terminal, for example, a mobile phone terminal, a tablet computer, a notebook computer, an augmented reality (augmented reality, AR)/virtual reality (virtual reality, VR) device, or a vehicle-mounted terminal. Alternatively, the execution device 510 may be a server, a cloud, or the like.

Specifically, the training device 520 may transfer the target neural network to the execution device 510.

In FIG. 11, the execution device 510 is configured with the input/output (input/output, I/O) interface 512, configured to exchange data with a peripheral device. A user may input data (for example, to-be-processed data in embodiments of this application) to the I/O interface 512 by using the client device 540.

The preprocessing module 513 and the preprocessing module 514 are configured to preprocess the input data received through the I/O interface 512. It should be understood that there may be no preprocessing module 513 and no preprocessing module 514 or only one preprocessing module. When the preprocessing module 513 and the preprocessing module 514 do not exist, the calculation module 511 may be directly used to process the input data.

When the execution device 510 preprocesses the input data, or when the calculation module 511 of the execution device 510 performs a related processing process such as calculation, the execution device 510 may invoke data, code, and the like in the data storage system 550 for corresponding processing. Alternatively, data, instructions, and the like obtained through corresponding processing may be stored in the data storage system 550.

Finally, the I/O interface 512 presents a processing result (for example, a data processing result in embodiments of this application) to the client device 540, to provide the processing result for the user.

In a case shown in FIG. 11, the user may manually provide input data, and the "manually providing the input data" may be implemented on an interface provided by the I/O interface 512. In another case, the client device 540 may automatically send the input data to the I/O interface 512. If the client device 540 is required to obtain authorization of the user when automatically sending the input data, the user may set corresponding permission on the client device 540. The user may view, on the client device 540, the result output by the execution device 510. A specific presentation form may be a specific manner such as display, sound, or action. The client device 540 may alternatively serve as a data collection end, collect the input data input to the I/O interface 512 and the output result output from the I/O interface 512 that are shown in the figure as new sample data, and store the new sample data in the database 530. Certainly, collection may alternatively be performed without using the client device 540, but the I/O interface 512 directly stores the input data input to the I/O interface 512 and the output result output from the I/O interface 512 that are shown in the figure in the database 530 as the new sample data.

It should be noted that FIG. 11 is merely a schematic diagram of the system architecture according to this embodiment of this application. Location relationships between devices, components, modules, and the like shown in the figure constitute no limitation. For example, in FIG. 11, the data storage system 550 is an external memory relative to the execution device 510. In other cases, the data storage system 550 may alternatively be placed in the execution device 510. It should be understood that the execution device 510 may be deployed in the client device 540.

In terms of model inference:

In this embodiment of this application, the calculation module 511 of the execution device 520 may obtain the code stored in the data storage system 550, to implement the data processing method in embodiments of this application.

In this embodiment of this application, the calculation module 511 of the execution device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processing, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of a hardware system having no instruction execution function and a hardware system having an instruction execution function.

Specifically, the calculation module 511 of the execution device 520 may be the hardware system having the instruction execution function. The data processing method provided in embodiments of this application may be software code stored in a memory. The calculation module 511 of the execution device 520 may obtain the software code from the memory, and execute the obtained software code to implement the data processing method provided in embodiments of this application.

It should be understood that the calculation module 511 of the execution device 520 may be the combination of the hardware system having no instruction execution function and the hardware system having the instruction execution function. Some steps of the data processing method provided in embodiments of this application may alternatively be implemented by using the hardware system having no instruction execution function in the calculation module 511 of the execution device 520. This is not limited herein.

In terms of model training:

In this embodiment of this application, the training device 520 may obtain code stored in a memory (which is not shown in FIG. 11 and may be integrated into the training device 520 or deployed separately from the training device 520) to implement the neural network search method in embodiments of this application.

In this embodiment of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processing, DSP), a microprocessor, or a microcontroller), or a combination of these hardware circuits. For example, the training device 520 may be a hardware system having an instruction execution function, for example, a CPU or a DSP, or may be a hardware system having no instruction execution function, for example, an ASIC or an FPGA, or may be a combination of a hardware system having no instruction execution function and a hardware system having an instruction execution function.

Specifically, the training device 520 may be the hardware system having the instruction execution function. The data processing method provided in embodiments of this application may be software code stored in a memory. The training device 520 may obtain the software code from the memory, and execute the obtained software code to implement the neural network search method provided in embodiments of this application.

It should be understood that the training device 520 may be the combination of the hardware system having no instruction execution function and the hardware system having the instruction execution function. Some steps of the neural network search method provided in embodiments of this application may alternatively be implemented by using the hardware system having no instruction execution function in the training device 520. This is not limited herein.

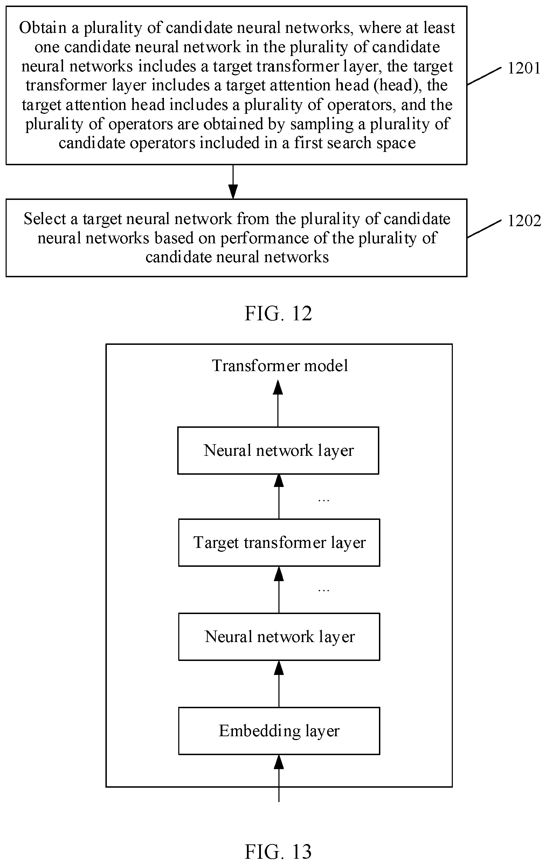

FIG. 12 is a schematic diagram of an embodiment of a neural network search method according to an embodiment of this application. The neural network search method provided in this embodiment of this application may be applied to a training device. The training device may be a terminal device such as a mobile phone, a tablet, a notebook computer, or an intelligent wearable device. Alternatively, the training device may be a cloud server. As shown in FIG. 12, the neural network search method provided in this embodiment of this application may include the following steps.

1201: Obtain a plurality of candidate neural networks, where at least one candidate neural network in the plurality of candidate neural networks includes a target transformer layer, the target transformer layer includes a target attention head (head), the target attention head includes a plurality of operators, and the plurality of operators are obtained by sampling a plurality of candidate operators included in a first search space.

In this embodiment of this application, the plurality of candidate neural networks may be constructed through search. The candidate neural network may be a neural network including a transformer layer. When the candidate neural network is constructed, a type (for example, the type may be a transformer layer or a target network layer including a convolutional layer described in a subsequent embodiment) of each network layer included in the candidate neural network may be determined in a sampling manner. Then, sampling may be performed on the network layer to complete construction of the candidate neural network.

In a possible implementation, the types (for example, the type may be the transformer layer or the target network layer including the convolutional layer described in the subsequent embodiment) of all the network layers included in the candidate neural network may be determined in the sampling manner.

In a possible implementation, types (for example, the type may be the transformer layer or the target network layer including the convolutional layer described in the subsequent embodiment) of some network layers included in the candidate neural network may be determined in the sampling manner, and structures of the remaining network layers may be preset.

In a possible implementation, it may be determined, in a sampling or fixed setting manner, that the type of the network layer in the candidate neural network is the transformer layer (which may be referred to as the target transformer layer in this embodiment of this application), and a structure of the target attention head (head) in the target transformer layer is determined by sampling the operators in the first search space.

FIG. 13 is a schematic diagram of a structure of a transformer model. The target transformer layer may be any transformer layer in the candidate neural network. It should be understood that the target transformer layer may be a neural network layer adjacent to an embedding layer, or may be a neural network layer closest to an output. This is not limited herein.

It should be understood that a location of the target transformer layer in the candidate neural network may also be determined in the sampling manner.

It should be understood that the structure in FIG. 13 is merely an example, and a quantity of neural network layers may be set as required. At the embedding layer, embedding processing may be performed on an input, to obtain a plurality of feature vectors. A core characteristic of the transformer model is a unique attention mechanism used by the transformer model. During processing of a natural language, for example, a sentence, the transformer model uses the attention mechanism to assign different attention coefficients to word vectors in the sentence. Therefore, impact of a context on words in the sentence is considered more comprehensively. At the embedding layer, N embedding vectors Xi are obtained based on node features and location code of nodes in a current sequence. An attention layer is connected to the embedding layer. The N embedding vectors are obtained from the embedding layer and used as input vectors; the input vectors are aggregated based on a degree of association between the N input vectors, to obtain N output vectors; and the N output vectors are output to a subsequent transformer layer (or the target network layer in this embodiment of this application). The transformer layer obtains the output of the previous layer as the input vectors, and performs an operation similar to that of the previous transformer layer.

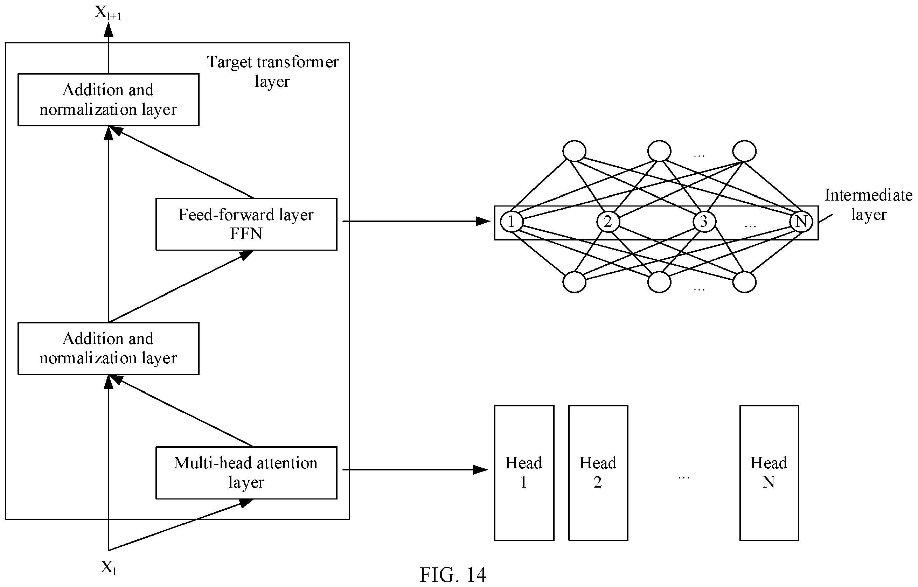

In a possible implementation, the target transformer layer in the transformer model may be constructed in the manner of operator sampling. Specifically, the target attention head (head) in the target transformer layer in the transformer model may be constructed in the manner of operator sampling. The target transformer layer may include a plurality of attention heads (heads), and the target attention head (head) may be any one of the plurality of attention heads (heads). Optionally, structures of all attention heads (heads) in the plurality of attention heads (heads) are the same. FIG. 14 is a schematic diagram of a structure of a transformer layer. The transformer layer may include a multi-head attention layer (or an attention layer for short), an addition and normalization (add&norm) layer, a feed-forward layer (feed-forward net, FFN), and an addition and normalization layer that are successively adjacent.

The multi-head attention layer obtains the N input vectors Xi from a previous layer of the multi-head attention layer, and the N input vectors $X_I$ may also be represented as a matrix X. The multi-head attention layer transforms each vector based on the degree of association between the vectors by using a self-attention mechanism, to obtain the N output vectors. The N output vectors may also be represented as a matrix Y It may be understood that, when the multi-head attention layer is a layer directly connected to the embedding layer, for example, a transformer layer directly connected to the embedding layer in FIG. 14, the input vectors obtained by the multi-head attention layer are the embedding vectors output by the embedding layer. When the multi-head attention layer is a multi-head attention layer included in the subsequent transformer layer, for example, a multi-head attention layer included in a transformer layer directly connected to the previous transformer layer in FIG. 14, the input vectors obtained by the multi-head attention layer are output vectors of the previous transformer layer. The multi-head attention layer may include a plurality of attention heads (heads) (for example, a Head 1, a Head 2, ..., and a Head N shown in FIG. 14). The target attention head may be any one of the plurality of attention heads (heads).

The following describes how to construct the target head in a sampling manner.

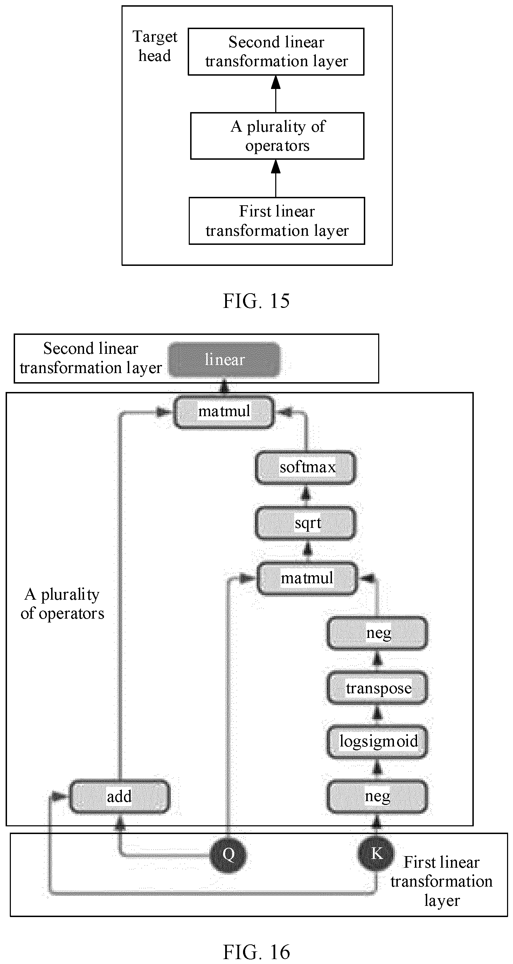

In a possible implementation, refer to FIG. 15. The target attention head may include a first linear transformation layer, the plurality of operators obtained through sampling, and a second linear transformation layer.

An input side of the target attention head may be set as the first linear transformation layer, the first linear transformation layer is used to process an input vector of the target attention head by using a target transformation matrix, and the plurality of operators are used to perform an operation on a data processing result of the first linear transformation layer. The target transformation matrix includes only X transformation matrices, X is a positive integer less than or equal to 4, and a quantity of X is determined in a sampling manner.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, a matrix type of a transformation matrix included in the target transformation matrix may be determined in a sampling manner, where the matrix type is the Q transformation matrix, the K transformation matrix, or the V transformation matrix, or the matrix type of the transformation matrix included in the target transformation matrix is preset. This is not limited herein. When the matrix type of the transformation matrix included in the target transformation matrix is determined in the sampling manner, a possibility of the structure of the target attention head (head) can be increased, and a model with better performance can be found. When the target transformation matrix includes the Q transformation matrix, the target attention head (head) may transform each input vector Xi of the N input vectors <X1, X2, ..., XN> by using the Q transformation matrix, to obtain a first intermediate vector (q vector) corresponding to each input vector. In an operation, the Q transformation matrix may be used to perform linear transformation on the input matrix X including the N input vectors, to obtain a Q matrix of the input matrix, and then the Q matrix is split to obtain a q vector corresponding to each input vector. When the target transformation matrix includes the K transformation matrix, the target attention head (head) may transform each input vector Xi of the N input vectors <X1, X2, ..., XN> by using the K transformation matrix, to obtain a first intermediate vector (K vector) corresponding to each input vector. In an operation, the K transformation matrix may be used to perform linear transformation on the input matrix X including the N input vectors, to obtain a K matrix of the input matrix, and then the K matrix is split to obtain a k vector corresponding to each input vector. When the target transformation matrix includes the V transformation matrix, the target attention head (head) may transform each input vector Xi of the N input vectors <X1, X2, ..., XN> by using the V transformation matrix, to obtain a first intermediate vector (V vector) corresponding to each input vector. In an operation, the V transformation matrix may be used to perform linear transformation on the input matrix X including the N input vectors, to obtain a V matrix of the input matrix, and then the V matrix is split to obtain a v vector corresponding to each input vector. When the target transformation matrix includes the P transformation matrix, the target attention head (head) may transform each input vector Xi of the N input vectors <X1, X2, ..., XN> by using the P transformation matrix, to obtain a first intermediate vector (P vector) corresponding to each input vector. In an operation, the P transformation matrix may be used to perform linear transformation on the input matrix X including the N input vectors, to obtain a P matrix of the input matrix, and then the P matrix is split to obtain a p vector corresponding to each input vector. In a possible implementation, the target attention head may further include the second linear transformation layer, and the second linear transformation layer is used to perform linear transformation on the data processing result of the plurality of operators, to obtain an output vector of the target attention head.

In a possible implementation, sizes of the input vector of the target attention head and the output vector of the target attention head are the same.

In a possible implementation, a source of operator sampling may be the first search space, and the first search space may include the plurality of candidate operators. When an attention head (head) is constructed, a plurality of candidate operators in the first search space may be sampled, and the candidate operators obtained through sampling are combined (a combination manner may also be sampling), to obtain one candidate neural network. After a plurality of times of sampling, the plurality of candidate neural networks may be obtained.

The following describes the first search space in this embodiment of this application.

In a possible implementation, the first search space may include the plurality of candidate operators, and the candidate operators may be unary operators or binary operators. The unary operator (unary operation) refers to performing an operation on only one piece of data, for example, a negative (neg) number operation, a square root (sqrt) operation, a transpose (transpose) operation, a softmax operation, a logsigmoid operation, and a softsign operation. The binary operator (binary operation) refers to a rule for performing an operation on two pieces of data to obtain a third piece of data, for example, an add (add) operation, a dot multiplication (matmul) operation, a cosine similarity operation, and a euclidean distance operation.

In a possible implementation, the plurality of candidate operators may include a softmax operator and a dot multiplication operator that are originally generated at the transformer layer.

It should be understood that the foregoing sampling may be random sampling, or some preferred/reference sampling manners are used, and are not completely random. For example, during sampling, a structure that is not greatly different from that of a head in an existing well-known transformer layer may be sampled.

For example, an example of an operator type included in the first search space may be shown in Table 1.

**Table 1**

| Type | Operation | Expression |
|------|-----------|------------|
| unary | neg | $-x$ |
| | sqrt | $\sqrt{x}$ |
| | transpose | $x^{\mathrm{T}}$ |
| | softmax | $softmax(x)$ |
| | logsigmoid | $log(1/(1 + exp(-x)))$ |
| | softsign | $x/(1 + |x|)$ |
| binary | add | $x_1 + x_2$ |
| | matmul | $x_1 \cdot x_2$ |
| | cosine similarity | $cos(x_1, x_2)$ |
| | euclidean distance | $d(x_1, x_2)$ |

In a possible implementation, the target attention head may be constructed by sampling the candidate operators in the first search space. Specifically, the plurality of operators and a connection relationship between the plurality of operators may be sampled from the first search space. In other words, when the target attention head is constructed, a type of each operator, a quantity of operators, and the connection relationship between the operators that are included in the target attention head may be determined in a sampling manner. Further, the target attention head (head) may be constructed based on the plurality of operators obtained through sampling and the sampled connection relationship between the plurality of operators.

In a possible implementation, the quantity of operators included in the target attention head is less than a preset value. For example, the preset value may be 10, 11, 12, 14, 15, 20, or 21.

In a possible implementation, the target head in the target transformer layer may be constructed in the foregoing manner, and in a possible implementation, all heads may use a same structure. At least one transformer layer in the candidate neural network may be constructed in a manner same as the foregoing manner of constructing the target transformer layer.

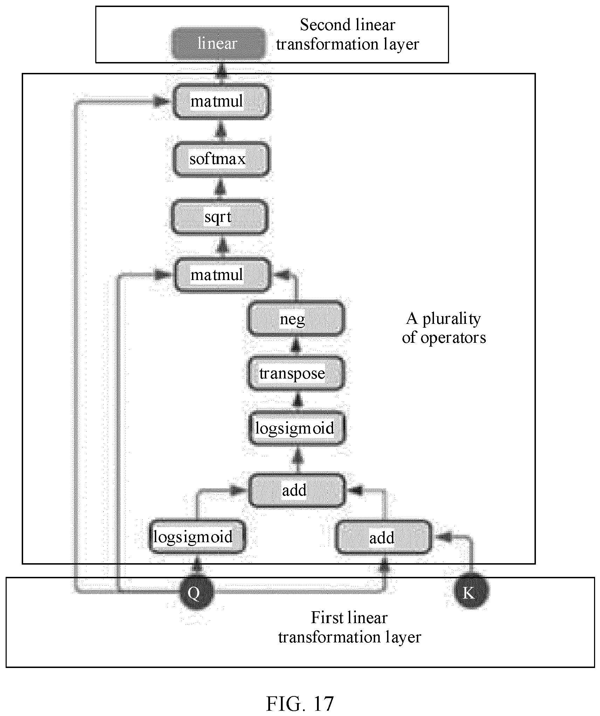

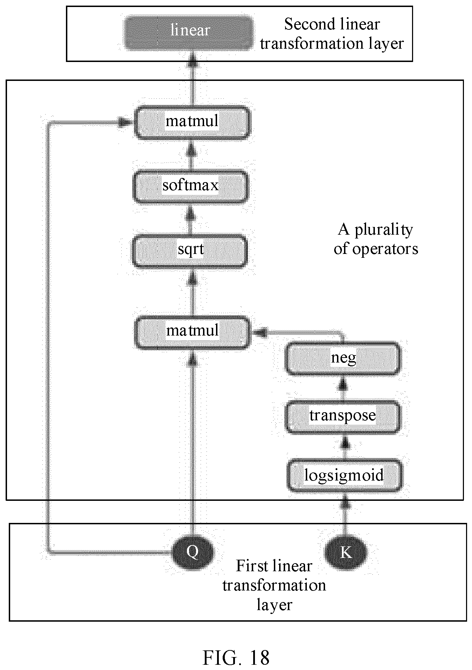

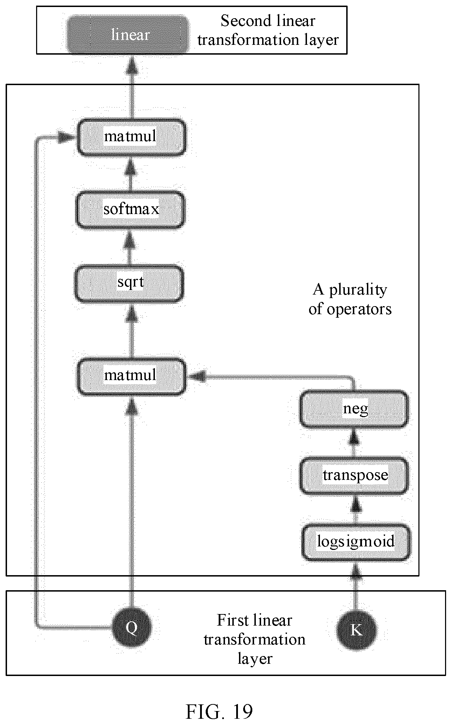

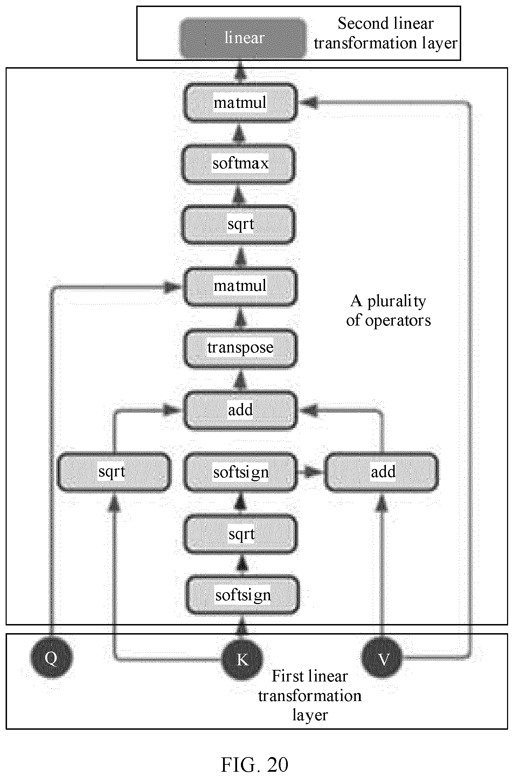

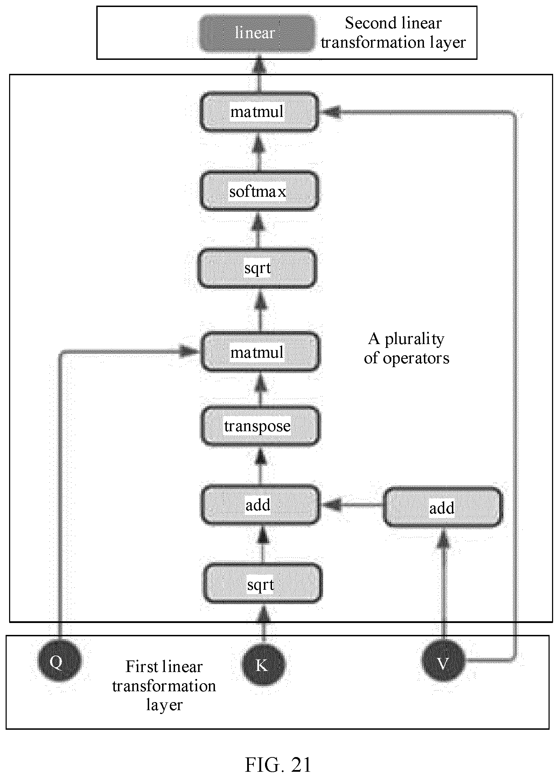

FIG. 16 to FIG. 21 are schematic diagrams of structures of a target attention head (head) obtained in a sampling manner.

In this embodiment of this application, combined with model search, a new attention structure that is stronger than an original self-attention mechanism can be generated, and effect in a wide range of downstream tasks is significantly improved.

In a possible implementation, it may be determined, in the sampling or fixed setting manner, that the type of the network layer in the candidate neural network is the target network layer including the convolutional layer, and a size of a convolution kernel in the convolution layer in the target network layer is determined through sampling from a second search space.

In a possible implementation, because lightweight convolution (lightweight convolution) achieves good performance on a series of natural language understanding tasks (such as machine translation), the convolution kernel may use a lightweight convolution architecture to improve model performance.

The second search space may include convolution kernels of a plurality of sizes, and a selection space of the convolution kernel may be but is not limited to [3, 5, 7, 9, 15, 31, 65].

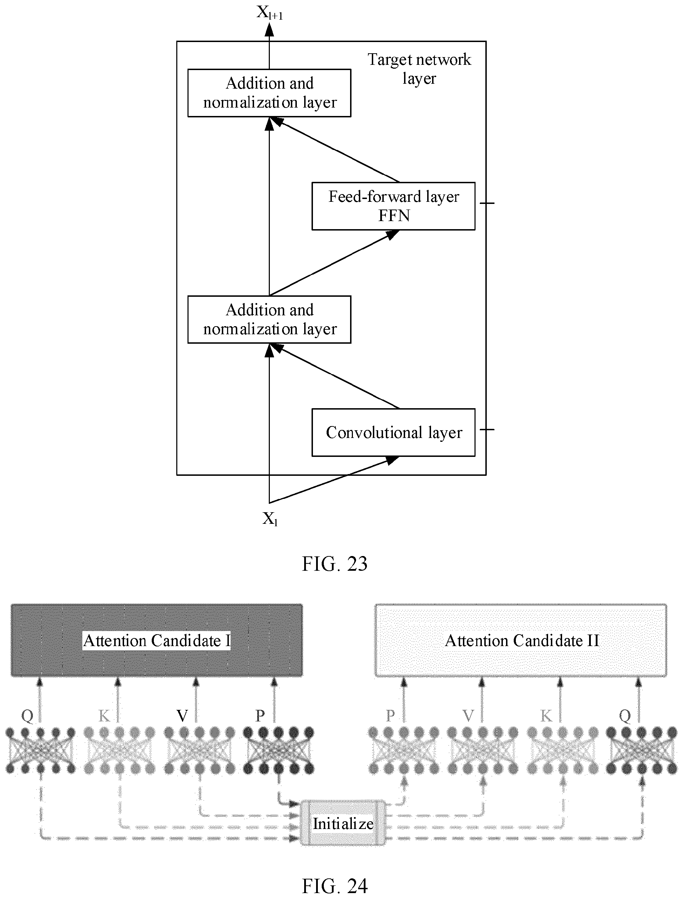

Refer to FIG. 23. The target network layer may include the convolutional layer, and the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN. In other words, an addition and normalization layer and an FFN in an existing transformer layer, and a residual connection architecture may be retained, and an attention head (head) is replaced with a convolutional layer, so that the target network layer in this embodiment of this application can be obtained. A type of the replaced convolution layer may be obtained by performing convolution kernel sampling in the second search space.

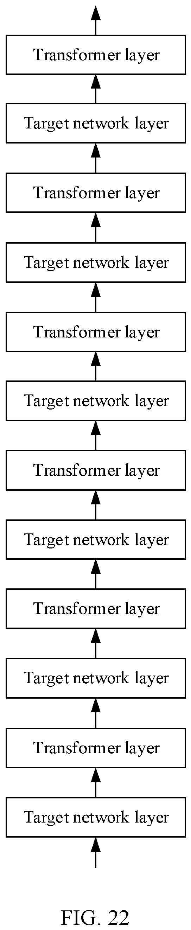

For example, refer to FIG. 22. FIG. 22 is a schematic diagram of a structure of a candidate neural network. The candidate neural network may include 12 network layers. In the 12 network layers, a transformer layer and a target network layer alternately connect to each other in series. FIG. 23 is a schematic diagram of a structure of a target network layer according to an embodiment of this application. The target network layer may include the convolutional layer, two addition and normalization layers (namely, the first addition and normalization layer and the second addition and normalization layer), and the feed-forward layer FFN. The first addition and normalization layer is used to process the input vector of the target network layer and the output vector of the convolution layer, and the feed-forward layer FFN is used to process the output vector of the first addition and normalization layer. The second addition and normalization layer is used to process the output vector of the first addition and normalization layer and the output vector of the feed-forward layer FFN.

In this embodiment of this application, diversified search spaces are designed, and include both a local operator (the convolution kernel in the convolutional layer) operator and a global operator (an operator in the transformer layer). The global operator can construct a new attention mechanism in combination with a mathematical basic operator, and the local operator includes a plurality of convolution kernels of different sizes. The global operator and the local operator are combined, so that an association relationship between words or sentences can be captured more effectively, and performance of a found model can be improved. In addition, the neural network model in this embodiment of this application may be used as a pre-training model, and is applicable to a plurality of downstream tasks.

In a possible implementation, the plurality of candidate neural networks may be constructed through sampling. To select a model with good performance, a quantity of sampled candidate neural networks is large. Performance of the plurality of candidate neural networks may be determined through training, and a specific quantity of networks are preliminarily selected from the plurality of candidate neural networks as parent networks based on the performance of the plurality of candidate neural networks. Then, operators in the parent networks can be replaced (if transformer layers are used, operators in attention heads (heads) are replaced. If target network layers are used, convolution kernels may be replaced), to obtain a plurality of sub-networks, the plurality of sub-networks are trained to determine performance of the plurality of sub-networks, a target neural network is determined from the plurality of sub-networks based on the performance of the plurality of sub-networks, and the target neural network is used as a search result of the neural network.

The foregoing initially constructed candidate neural network may be referred to as a second neural network, the parent network may be referred to as the first neural network, and the sub-network may be referred to as the candidate neural network.

In this embodiment of this application, the plurality of candidate neural networks include a target candidate neural network. An example in which the target candidate neural network is determined is used below for description.

In this embodiment of this application, a plurality of second neural networks may be obtained in a sampling manner (for details, refer to the descriptions of obtaining the candidate neural networks through sampling in the foregoing embodiment, and details are not described herein again), and the plurality of second neural networks are trained to obtain a plurality of trained second neural networks and performance of the plurality of trained second neural networks. Specifically, random parameter initialization may be performed on the plurality of second neural networks, and fast search training (for example, 4w steps of training) is performed on the plurality of second neural networks, to obtain the plurality of trained second neural networks. In addition, evaluation is performed on the plurality of trained second neural networks by using a GLUE task, to obtain the performance of the plurality of second neural networks, N optimal networks are selected as parent networks, and training parameters of the parent networks are stored. The N parent networks may include a first neural network. The first neural network may include a first transformer layer, the first transformer layer includes a first attention head, and the first attention head includes target operators. Then, replacement operators may be determined from M candidate operators based on positive impact on performance of the first neural network when the target operators in the first attention head are replaced with the M candidate operators in the first search space, and the target operators in the first attention head are replaced with the replacement operators, to obtain the target attention head.

The target operator is used as an example. The target operator may be located at a target operator location of the second neural network. The target operator location may represent, to some extent, a location of a distance from an input of the head, and the target operator location may be related to a manner of representing a location between network operators in code. When positive impact is calculated, a manner of calculating a location of each operator in the second neural network is consistent with a manner of calculating the target operator location of the target operator in the second neural network, and each of the manners can express a degree of positive impact of a different location of the operator in the attention head (head) on model performance. When the positive impact is calculated, the positive impact on the performance of the first neural network may be determined based on an operator that is in each of the plurality of trained second neural network and that is located at the target operator location and the performance of the plurality of trained second neural networks, and/or an occurrence frequency of the operator that is in each trained second neural network and that is located at the target operator location when the target operators in the first attention head are replaced with the M candidate operators in the first search space.

For example, the positive impact may be represented by using an upper confidence bound UCB (upper confidence bound), and a specific UCB score calculation manner may be as follows:

$$u_i = \mu_i + c\sqrt{\frac{2logN}{N_i}},$$

where

$\mu_i$ represents a score obtained by an operator i in a current location of a network structure, $N_i$ represents a quantity of times that the operator i is sampled in history (when the second neural network is sampled), and $N$ represents a quantity of times that all operators are sampled. When an operator is rarely sampled, a larger value is obtained in the right half of the formula, and the current operator is selected with a higher probability. It should be understood that after UCB scores of all operators at all locations are calculated, softmax calculation may be performed on these scores to obtain probability distribution. A probability is set to a probability that the operator i is activated at the current location.

In this embodiment of this application, operator replacement is performed by using the positive impact, so that search precision and search breadth of an algorithm can be balanced, and a local optimal network architecture can be avoided, and a better network architecture can be continuously found.

After operator replacement is performed on the first neural network, the target candidate neural network may be obtained. When the target candidate neural network is trained, parameter initialization may be performed on the target candidate neural network based on the first neural network, to obtain an initialized target candidate neural network. An updatable parameter in the initialized target candidate neural network is obtained by performing parameter sharing on an updatable parameter at a same location in the first neural network. Further, the target candidate neural network on which parameter initialization is performed may be trained, to obtain performance of the target candidate neural network.

When a parameter of an attention head (head) is shared, the updatable parameter is a parameter in a transformation matrix in the attention head (head). Refer to FIG. 24. Parameter sharing (or referred to as parameter inheritance) may be performed on a parameter in a transformation matrix of a left attention head (head), to initialize a parameter of a right attention head (head).

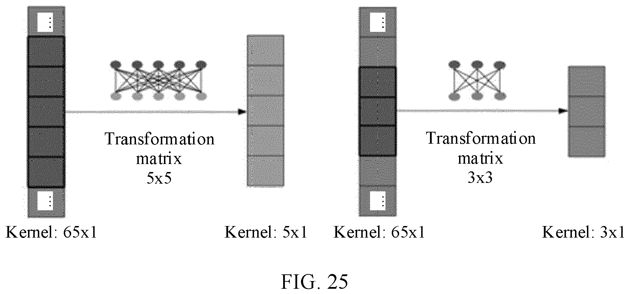

When a parameter of the convolutional layer is shared, the updatable parameter is a convolution kernel. Refer to FIG. 25. Parameter sharing may be performed on a left convolution kernel (65x1), to initialize a parameter of a right convolution kernel (5x1). Similarly, parameter sharing may be performed on the left convolution kernel (65x1), to initialize a parameter of a right convolution kernel (3x1). It should be understood that a corresponding parameter at a centralmost location of the convolution kernel may be selected for parameter sharing.

In this embodiment of this application, parameter initialization is performed in a parameter sharing manner, so that a search speed can be accelerated, repeated training can be avoided, and search efficiency can be greatly improved.

1202: Select the target neural network from the plurality of candidate neural networks based on the performance of the plurality of candidate neural networks.

In this embodiment of this application, after the plurality of candidate neural networks are obtained, the plurality of neural networks may be trained to obtain performance of each candidate neural network, and then the target neural network may be selected from the plurality of candidate neural networks based on the performance of each candidate neural network, where there is at least one target neural network. When there is one target neural network, the target neural network may be a model with best performance in the plurality of candidate neural networks. When there are a plurality of target neural networks, the target neural networks may be a plurality of models with best performance in the plurality of candidate neural networks.

It should be understood that, after training, the model may be further tested. For example, the found model may be fully-trained (fully-trained), and testing is performed by using a natural language understanding GLUE dataset and an automatic question answering dataset SQuAD.

A neural network search algorithm provided in this embodiment of this application greatly improves performance of a search algorithm. Compared with a random search (RS) and an evolution algorithm (EA), a result obtained by using the neural network search algorithm provided in this embodiment of this application is significantly improved. Details may be shown in the following Table 2.

**Table 2**

|        | #Params of Att | CoLA | MRPC | MNLI-m | STS-B | RTE  | QQP  | QNLI | SST-2 | AVG  |
|--------|----------------|------|------|--------|-------|------|------|------|-------|------|
| RS     | 18.9M          | 49.9 | 85.2 | 81.4   | 88.2  | 68.6 | 86.7 | 88.9 | 91.1  | 80.0 |
| EA     | 15.4M          | 57.8 | 89.4 | 82.5   | 87.9  | 67.5 | 87.5 | 89.3 | 91.7  | 81.7 |
| OP-NAS | 15.4M          | 58.5 | 90.5 | 83.2   | 88.9  | 67.9 | 87.8 | 90.2 | 92.8  | 82.5 |

In a possible implementation, the target neural network is used to implement at least one of the following task types: reading comprehension, text translation, retelling recognition, named entity recognition, text sentiment analysis, natural language inference, automatic text question answering, text intention recognition, text classification, text simplification, or text story generation.

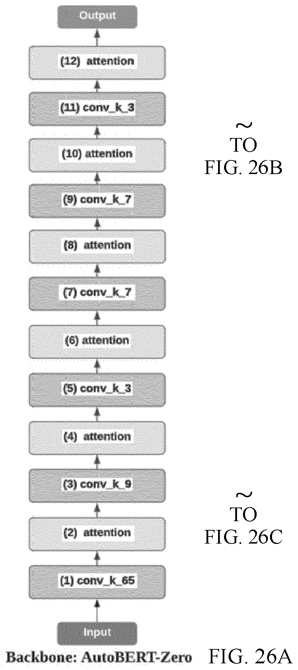

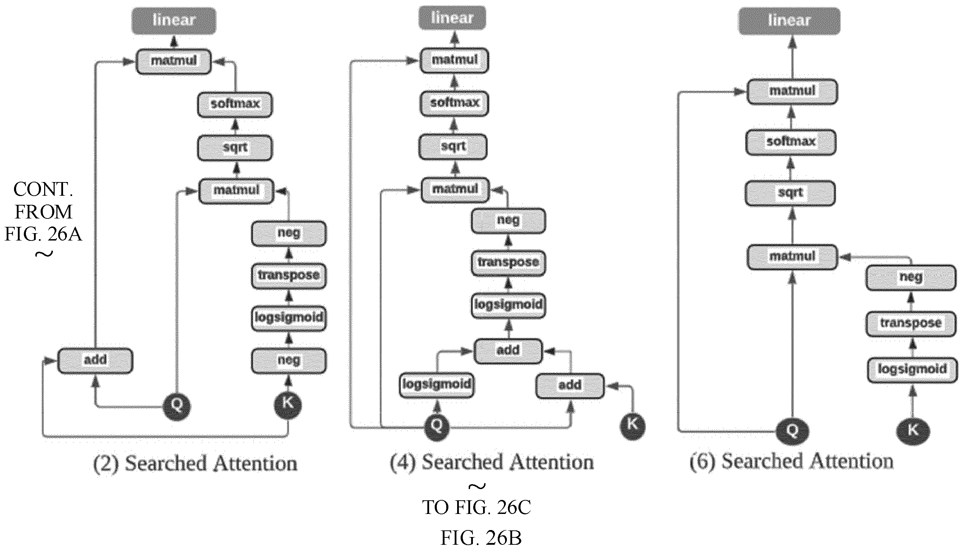

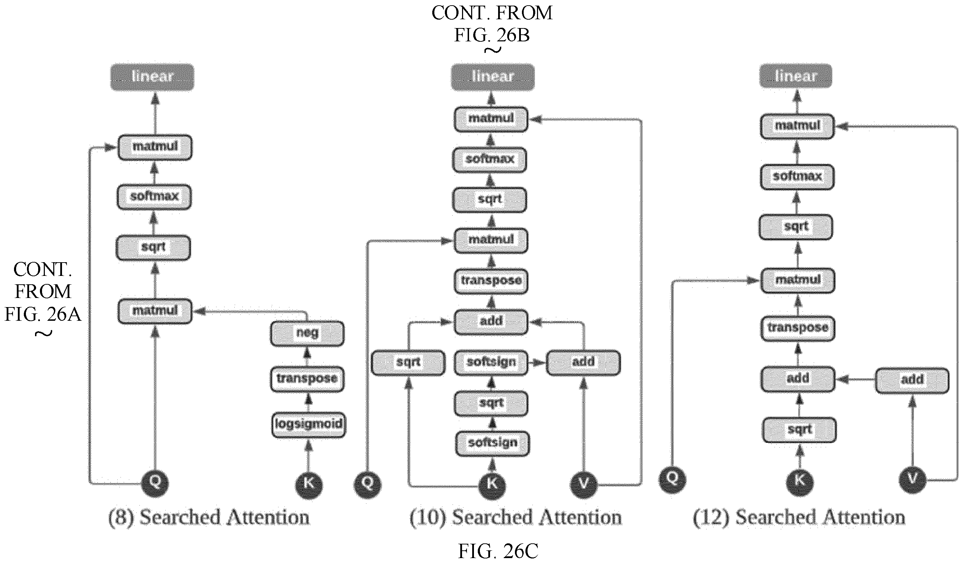

FIG. 26A to FIG. 26C are a network architecture search result obtained based on the neural network search algorithm according to an embodiment of this application. A network architecture is a transformer structure that includes 12 submodules. Each module selects a suitable combination structure of convolution and an attention mechanism. Layers 2, 4, 6, 8, 10, and 12 are new attention architectures, and are formed by a series of basic operators. Layers 1, 3, 5, 7, 9, and 11 are convolution modules (namely, target network layers described in embodiments of this application). Sizes of convolution kernels are different, and a size of a convolution kernel is determined by a required receptive field of a layer at which the convolution kernel is located. Complexity of attention mechanisms gradually increases from a low layer to a high layer, and a core length of a found convolution kernel also increases from the low layer to the high layer. This pre-trained network architecture achieves better performance in a series of downstream tasks than current remaining models.

The following describes effect of the neural network search method in embodiments of this application by using a natural language understanding GLUE task and an automatic question answering SQuAD task as examples.

Pre-training data may include a general language understanding evaluation (General Language Understanding Evaluation, GLUE) task set, an MNLI (Multi-Genre Natural Language Inference) task set, a QQP (Quora Question Pairs) task set, a QNLI (Question Natural Language Inference) task set, an SST-2 (Stanford Sentiment Treebank) task set, a CoLA (Corpus of Linguistic Acceptability) task set, an STS-B (Semantic Textual Similarity Benchmark) task set, an MRPC (Microsoft Research Paraphrase Corpus) task set, and an RTE (Recognizing Textual Entailment) task set.

It can be learned from results obtained by using the eight datasets that, on the public dataset GLUE, a found model in embodiments of this application is greatly better than an existing SOTA manually designed model (BERT-base, T5-base, or the like) in terms of a speed and detection precision. Compared with automatic search algorithms AdaBERT and DynaBERT that depend on a teacher model with a huge quantity of parameters, this method does not depend on any teacher model, and a found model architecture also obtains a better result in most tasks, which may be specifically shown in Table 3. In the automatic question answering dataset SQuAD, performance of the found model in embodiments of this application is also significantly improved compared with that of the BERT-base, which may be specifically shown in Table 4.

**Table 3**

| | #Params | #Params of Att | CoLA | MRPC | MNLI-(m/mm) | STS-B | RTE | QQP | QNLI | SST-2 | AVG |
|---|---|---|---|---|---|---|---|---|---|---|---|
| BERT-base(ours) | 110M | 21.3M | 58.1 | 89.7 | 84.8/85.2 | 88.8 | 69.0 | 88.2 | 91.5 | 92.9 | 83.1 |
| AdaBERT(Chen et al., 2020) | 6.4 ~ 9.5M | - | - | 84.7 | 81.3/- | - | 64.1 | 70.5 | 87.2 | 91.9 | - |
| DynaBERT(Hou et al., 2020) | 110M | - | 59.7 | 86.3 | 84.9/85.5 | **90.1** | 72.2 | **91.4** | **92.1** | 93.2 | 83.9 |
| SyntheszierCR)(Tay et al., 2020a) | 98.9M | 10.2M | 41.2 | 85.9 | 77.6/78.1 | 74.3 | 59.2 | 85.5 | 87.6 | 91.2 | 75.6 |
| Syntheszier(D)(Tay et al., 2020a) | 101M | 11.8M | 18.9 | 86.4 | 77.4/78.1 | 75.5 | 57.4 | 85.2 | 86.9 | 89.9 | 72.8 |
| T5-base(Raffel et al., 2020) | 220M | - | 53.1 | **92.0** | 84.7/85.0 | 88.9 | **76.9** | 88.2 | 91.7 | 92.2 | 83.6 |
| AutoBERT-att | 104M | 15.9M | 62.2 | 90.0 | 84.6/85.0 | 90.0 | 73.6 | 88.5 | 91.1 | **93.8** | 84.3 |
| AutoBERT-conv | 104M | 15.4M | 63.8 | 91.4 | 84.4/84.6 | 89.7 | 69.7 | 88.3 | 91.3 | 93.1 | 84.0 |
| AutoBERT-w/o-desc | 104M | 15.4M | 63.5 | 91.4 | 84.5/85.0 | 89.7 | 71.5 | 88.2 | 91.4 | 93.7 | 84.3 |
| AutoBERT-Zero | 104M | 15.4M | **64.5** | 91.0 | **84.9/84.6** | 89.6 | 74.4 | 88.4 | 91.9 | 93.3 | **84.7** |

**Table 4**

| Model | #Params of Att | SQuAD v1.1 EM | v1.1 F1 | SQuAD v2.0 EM | v2.0 F1 |
|---|---|---|---|---|---|
| BERT-base(ours) | 21.3M | 78.9 | 86.7 | 70.2 | 72.8 |
| AutoBERT-att | 15.9M | 79.5 | 86.9 | **71.3** | **73.8** |
| AutoBERT-conv | 15.4M | 78.6 | 86.2 | 71.0 | 73.5 |
| AutoBERT-w/o-desc | 15.4M | 78.9 | 86.4 | 69.0 | 72.4 |
| AutoBERT-Zero | **15.4M** | **79.6** | **87.0** | 70.4 | 72.8 |

Embodiments of this application provide the neural network search method. The method includes: obtaining the plurality of candidate neural networks, where the at least one candidate neural network in the plurality of candidate neural networks includes the target transformer layer, the target transformer layer includes the target attention head (head), the target attention head includes the plurality of operators, and the plurality of operators are obtained by sampling the plurality of candidate operators included in the first search space; and selecting the target neural network from the plurality of candidate neural networks based on the performance of the plurality of candidate neural networks. In the foregoing manner, combined with model search, the new attention structure that is stronger than the original self-attention mechanism can be generated, and the effect in the wide range of downstream tasks is significantly improved.

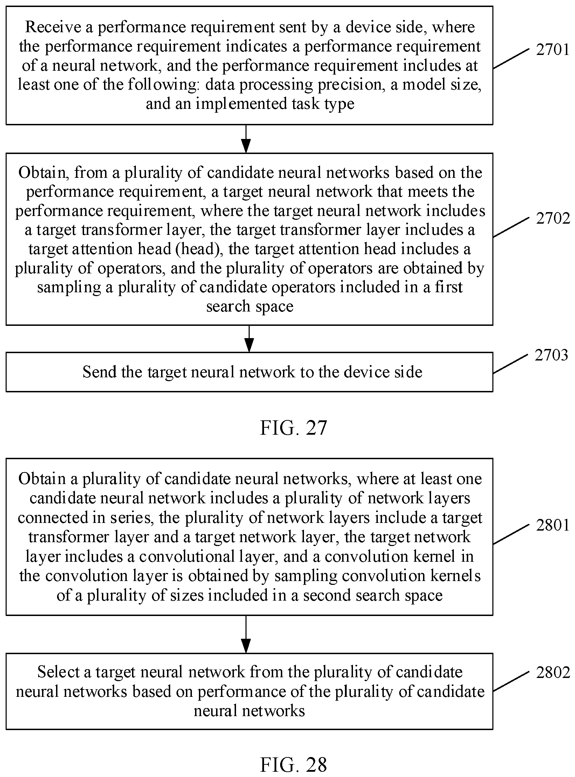

FIG. 27 is a schematic diagram of an embodiment of a model providing method according to an embodiment of this application. The model providing method provided in this embodiment of this application may be applied to a cloud server. As shown in FIG. 27, the model providing method provided in this embodiment of this application includes the following steps.

2701: Receive a performance requirement sent by a device side, where the performance requirement indicates a performance requirement of a neural network.

In a possible implementation, the performance requirement includes at least one of the following: data processing precision, a model size, and an implemented task type.

In this embodiment of this application, a terminal device may send a performance requirement of the terminal device to the cloud server.

Specifically, the terminal device may send the performance requirement to the cloud server, where the performance requirement includes but is not limited to at least one of a precision requirement, a latency requirement, and an implemented task type. Further, the cloud server may obtain the performance requirement.

2702: Obtain, from a plurality of candidate neural networks based on the performance requirement, a target neural network that meets the performance requirement, where the target neural network includes a target transformer layer, the target transformer layer includes a target attention head (head), the target attention head includes a plurality of operators, and the plurality of operators are obtained by sampling a plurality of candidate operators included in a first search space.

In a possible implementation, the cloud server may perform neural network search based on the performance requirement, to find the target neural network that meets the performance requirement. For specific descriptions of step 2702, refer to the descriptions in the embodiment corresponding to FIG. 12 in the foregoing embodiment, and details are not described herein again.

2703: Send the target neural network to the device side.

After obtaining the target neural network, the cloud server may send the target neural network back to user equipment, so that the user equipment may perform inference by using a model (the target neural network) returned from the cloud side. When performing model inference, the user equipment may obtain to-be-processed data, and process the to-be-processed data by using the target neural network, to obtain a processing result.

In a possible implementation, the plurality of candidate neural networks may be obtained. At least one candidate neural network in the plurality of candidate neural networks includes the target transformer layer, the target transformer layer includes the target attention head (head), the target attention head includes the plurality of operators, and the plurality of operators are obtained through sampling from the first search space. The target neural network that meets the performance requirement is obtained from the plurality of candidate neural networks based on the performance requirement.

In a possible implementation, the first search space includes the plurality of candidate operators, and the candidate operators are unary operators or binary operators. The target attention head is constructed based on the plurality of operators and an arrangement relationship between the plurality of operators, and the arrangement relationship between the plurality of operators is determined in a sampling manner.

In a possible implementation, the target attention head further includes a first linear transformation layer, the first linear transformation layer is used to process an input vector of the target attention head by using a target transformation matrix, and the plurality of operators are used to perform an operation on a data processing result of the first linear transformation layer. The target transformation matrix includes only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

In a possible implementation, the at least one candidate neural network includes a plurality of network layers connected in series, the plurality of network layers include the target transformer layer, and a location of the target transformer layer in the plurality of network layers is determined in a sampling manner.

In a possible implementation, the at least one candidate neural network includes the plurality of network layers connected in series, the plurality of network layers include the target transformer layer and a convolutional layer, and a convolution kernel in the convolution layer is obtained through sampling from a second search space. The second search space includes convolution kernels of a plurality of sizes.

In a possible implementation, a type of the convolution kernel in the convolutional layer is lightweight convolution (lightweight convolution).

FIG. 28 is a schematic diagram of an embodiment of a neural network search method according to an embodiment of this application. The neural network search method provided in this embodiment of this application may be applied to a training device. The training device may be a terminal device such as a mobile phone, a tablet, a notebook computer, or an intelligent wearable device. Alternatively, the training device may be a cloud server. As shown in FIG. 28, the neural network search method provided in this embodiment of this application may include the following steps.

2801: Obtain a plurality of candidate neural networks, where at least one candidate neural network includes a plurality of network layers connected in series, the plurality of network layers include a target transformer layer and a target network layer, the target network layer includes a convolutional layer, and a convolution kernel in the convolution layer is obtained by sampling convolution kernels of a plurality of sizes included in a second search space.

2802: Select a target neural network from the plurality of candidate neural networks based on performance of the plurality of candidate neural networks.

For descriptions of step 2801 and step 2802, refer to descriptions of the target network layer in the foregoing embodiment, and details are not described herein again.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

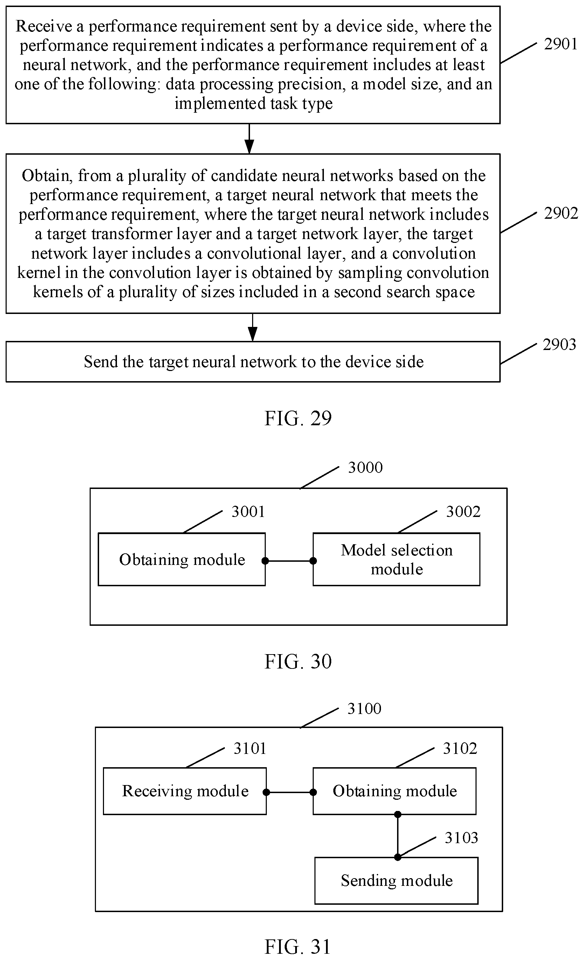

FIG. 29 is a schematic diagram of an embodiment of a model providing method according to an embodiment of this application. The model providing method provided in this embodiment of this application may be applied to a cloud server. As shown in FIG. 29, the model providing method provided in this embodiment of this application includes the following steps.

2901: Receive a performance requirement sent by a device side, where the performance requirement indicates a performance requirement of a neural network.

In this embodiment of this application, a terminal device may send a performance requirement of the terminal device to the cloud server.

Specifically, the terminal device may send the performance requirement to the cloud server, where the performance requirement includes but is not limited to at least one of a precision requirement, a latency requirement, and an implemented task type. Further, the cloud server may obtain the performance requirement.

2902: Obtain, from a plurality of candidate neural networks based on the performance requirement, a target neural network that meets the performance requirement, where the target neural network includes a target transformer layer and a target network layer, the target network layer includes a convolutional layer, and a convolution kernel in the convolution layer is obtained by sampling convolution kernels of a plurality of sizes included in a second search space.

In a possible implementation, the cloud server may perform neural network search based on the performance requirement, to find the target neural network that meets the performance requirement. For specific descriptions of step 2702, refer to the descriptions in the embodiment corresponding to FIG. 28 in the foregoing embodiment, and details are not described herein again.

2903: Send the target neural network to the device side.

After obtaining the target neural network, the cloud server may send the target neural network back to user equipment, so that the user equipment may perform inference by using a model (the target neural network) returned from the cloud side. When performing model inference, the user equipment may obtain to-be-processed data, and process the to-be-processed data by using the target neural network, to obtain a processing result.

In a possible implementation, the plurality of candidate neural networks may be obtained, and the target neural network that meets the performance requirement is obtained from the plurality of candidate neural networks based on the performance requirement.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

FIG. 30 is a schematic diagram of an embodiment of a neural network search apparatus according to an embodiment of this application. As shown in FIG. 30, a neural network search apparatus 3000 provided in this embodiment of this application may include:

an obtaining module 3001, configured to obtain a plurality of candidate neural networks, where at least one candidate neural network in the plurality of candidate neural networks includes a target transformer layer, the target transformer layer includes a target attention head (head), the target attention head includes a plurality of operators, and the plurality of operators are obtained by sampling a plurality of candidate operators included in a first search space.

For the descriptions of the obtaining module 3001, refer to the descriptions of step 1201 in the foregoing embodiment, and details are not described herein again.

The neural network search apparatus 3000 further includes: a model selection module 3002, configured to select a target neural network from the plurality of candidate neural networks based on performance of the plurality of candidate neural networks.

For descriptions of the model selection module 3002, refer to the descriptions of step 1202 in the foregoing embodiment, and details are not described herein again.

In a possible implementation, the first search space includes the plurality of candidate operators, and the candidate operators are unary operators or binary operators. The unary operator (unary operation) refers to performing an operation on only one piece of data, for example, a negative (neg) number operation, a square root (sqrt) operation, a transpose (transpose) operation, a softmax operation, a logsigmoid operation, and a softsign operation. The binary operator (binary operation) refers to a rule for performing an operation on two pieces of data to obtain a third piece of data, for example, an add (add) operation, a dot multiplication (matmul) operation, a cosine similarity operation, and a euclidean distance operation.

In a possible implementation, the plurality of candidate operators include a softmax operator and a dot multiplication operator.

In a possible implementation, the target attention head may be constructed by sampling the candidate operators in the first search space. Specifically, the plurality of operators and a connection relationship between the plurality of operators may be sampled from the first search space. In other words, when the target attention head is constructed, a type of each operator, a quantity of operators, and the connection relationship between the operators that are included in the target attention head may be determined in a sampling manner. Further, the target attention head (head) may be constructed based on the plurality of operators obtained through sampling and the sampled connection relationship between the plurality of operators.

In a possible implementation, the target attention head further includes a first linear transformation layer, the first linear transformation layer is used to process an input vector of the target attention head by using a target transformation matrix, and the plurality of operators are used to perform an operation on a data processing result of the first linear transformation layer.

In a possible implementation, the target transformation matrix includes only X transformation matrices, X is a positive integer less than or equal to 4, and a quantity of X is determined in a sampling manner.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, the target attention head further includes a second linear transformation layer, and the second linear transformation layer is used to perform linear transformation on the data processing result of the plurality of operators, to obtain an output vector of the target attention head.

In a possible implementation, sizes of the input vector of the target attention head and the output vector of the target attention head are the same.

In a possible implementation, the quantity of operators included in the target attention head is less than a preset value.

In a possible implementation, the target transformer layer in a transformer model may be constructed in a manner of operator sampling. Specifically, the target attention head (head) in the target transformer layer in the transformer model may be constructed in the manner of operator sampling. The target transformer layer may include a plurality of attention heads (heads), and the target attention head (head) may be any one of the plurality of attention heads (heads). Optionally, structures of all attention heads (heads) in the plurality of attention heads (heads) are the same.

In a possible implementation, the at least one candidate neural network includes a plurality of network layers connected in series, the plurality of network layers include the target transformer layer, and a location of the target transformer layer in the plurality of network layers is determined in a sampling manner.

In a possible implementation, the at least one candidate neural network includes the plurality of network layers connected in series, the plurality of network layers include the target transformer layer and a target network layer, and the target network layer includes a convolutional layer. A convolution kernel in the convolutional layer may be obtained by sampling convolution kernels of a plurality of sizes included in a second search space.

In a possible implementation, it may be determined, in a sampling or fixed setting manner, that a type of a network layer in the candidate neural network is the target network layer including the convolutional layer, and a size of the convolution kernel in the convolution layer in the target network layer is determined through sampling from the second search space.

In this embodiment of this application, diversified search spaces are designed, and include both a local operator (the convolution kernel in the convolutional layer) operator and a global operator (an operator in the transformer layer). The global operator can construct a new attention mechanism in combination with a mathematical basic operator, and the local operator includes a plurality of convolution kernels of different sizes. The global operator and the local operator are combined, so that an association relationship between words or sentences can be captured more effectively, and performance of a found model can be improved. In addition, the neural network model in this embodiment of this application may be used as a pre-training model, and is applicable to a plurality of downstream tasks.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN. In other words, an addition and normalization layer and an FFN in an existing transformer layer, and a residual connection architecture may be retained, and an attention head (head) is replaced with a convolutional layer, so that the target network layer in this embodiment of this application can be obtained. A type of the replaced convolution layer may be obtained by performing convolution kernel sampling in the second search space.

In a possible implementation, the plurality of candidate neural networks include a target candidate neural network; and the obtaining module 3001 is specifically configured to: construct a target attention head in the target candidate neural network; and

the constructing a target attention head in the target candidate neural network includes:

obtaining a first neural network, where the first neural network includes a first transformer layer, the first transformer layer includes a first attention head, and a plurality of operators included in the first attention head are obtained by sampling a plurality of candidate operators included in the first search space; and

determining replacement operators from M candidate operators based on positive impact on performance of the first neural network when target operators in the first attention head are replaced with the M candidate operators in the first search space; and replacing the target operators in the first attention head with the replacement operators, to obtain the target attention head.

In a possible implementation, the obtaining module 3001 is specifically configured to:

obtain a plurality of second neural networks, and train the plurality of second neural networks to obtain a plurality of trained second neural networks and performance of the plurality of trained second neural networks; and
select, from the plurality of trained second neural networks based on the performance of the plurality of trained second neural networks, N trained second neural networks whose performance meets a preset requirement, where the N trained second neural networks include the first neural network.

In a possible implementation, the target operator is located at a target operator location of the second neural network; and the apparatus further includes:
a determining module, configured to determine, based on an operator that is in each of the plurality of trained second neural networks and that is located at the target operator location and the performance of the plurality of trained second neural networks, and/or an occurrence frequency of the operator that is in each trained second neural network and that is located at the target operator location, the positive impact on the performance of the first neural network when the target operators in the first attention head are replaced with the M candidate operators in the first search space.
In a possible implementation, the apparatus further includes:

a parameter initialization module, configured to perform parameter initialization on the target candidate neural network based on the first neural network, to obtain an initialized target candidate neural network, where an updatable parameter in the initialized target candidate neural network is obtained by performing parameter sharing on an updatable parameter at a same location in the first neural network; and
a model training module, configured to train the target candidate neural network on which parameter initialization is performed, to obtain performance of the target candidate neural network.

In a possible implementation, the target neural network is used to implement at least one of the following task types:
reading comprehension, text translation, retelling recognition, named entity recognition, text sentiment analysis, natural language inference, automatic text question answering, text intent recognition, text classification, text simplification, or text story generation.
FIG. 31 is a schematic diagram of an embodiment of a model providing apparatus according to an embodiment of this application. As shown in FIG. 31, a model providing apparatus 3100 provided in this embodiment of this application may include:
a receiving module 3101, configured to receive a performance requirement sent by a device side, where the performance requirement indicates a performance requirement of a neural network.
For the descriptions of the receiving module 3101, refer to the descriptions of step 2701 in the foregoing embodiment, and details are not described herein again.
The model providing apparatus 3100 further includes: an obtaining module 3102, configured to obtain, from a plurality of candidate neural networks based on the performance requirement, a target neural network that meets the performance requirement, where the target neural network includes a target transformer layer, the target transformer layer includes a target attention head (head), the target attention head includes a plurality of operators, and the plurality of operators are obtained by sampling a plurality of candidate operators included in a first search space.
For the descriptions of the obtaining module 3102, refer to the descriptions of step 2702 in the foregoing embodiment, and details are not described herein again.
The model providing apparatus 3100 further includes: a sending module 3103, configured to send the target neural network to the device side.
For the descriptions of the sending module 3103, refer to the descriptions of step 2703 in the foregoing embodiment, and details are not described herein again.
In a possible implementation, the performance requirement may include at least one of the following: data processing precision, a model size, and an implemented task type.
In a possible implementation, the obtaining module 3102 is specifically configured to:

obtain the plurality of candidate neural networks; and
obtain, from the plurality of candidate neural networks based on the performance requirement, the target neural network that meets the performance requirement.

In a possible implementation, the first search space includes the plurality of candidate operators, and the candidate operators are unary operators or binary operators. The target attention head is constructed based on the plurality of operators and an arrangement relationship between the plurality of operators, and the arrangement relationship between the plurality of operators is determined in a sampling manner.

In a possible implementation, the target attention head further includes a first linear transformation layer, the first linear transformation layer is used to process an input vector of the target attention head by using a target transformation matrix, and the plurality of operators are used to perform an operation on a data processing result of the first linear transformation layer. The target transformation matrix includes only X transformation matrices, X is a positive integer less than or equal to 4, and a quantity of X is determined in a sampling manner.

For example, the target transformation matrix may include only one of a Q transformation matrix, a V transformation matrix, and a K transformation matrix. Alternatively, the target transformation matrix includes only two of a Q transformation matrix, a V transformation matrix, and a K transformation matrix. Alternatively, the target transformation matrix includes a Q transformation matrix, a V transformation matrix, and a K transformation matrix.

For example, another transformation matrix (for example, referred to as a P transformation matrix) may be constructed. A structure of the P transformation matrix is similar to or completely consistent with those of the other transformation matrices. Further, the target transformation matrix may include at least one of the Q transformation matrix, the V transformation matrix, the K transformation matrix, and the P transformation matrix.

In a possible implementation, at least one candidate neural network includes a plurality of network layers connected in series, the plurality of network layers include the target transformer layer, and a location of the target transformer layer in the plurality of network layers is determined in a sampling manner.

In a possible implementation, the at least one candidate neural network includes the plurality of network layers connected in series, the plurality of network layers include the target transformer layer and a target network layer, and the target network layer includes a convolutional layer.

In a possible implementation, a location of the target network layer in the plurality of network layers is determined in a sampling manner.

In a possible implementation, a convolution kernel in the convolutional layer is obtained by sampling convolution kernels of a plurality of sizes included in a second search space.

In a possible implementation, a type of the convolution kernel in the convolutional layer is lightweight convolution (lightweight convolution).

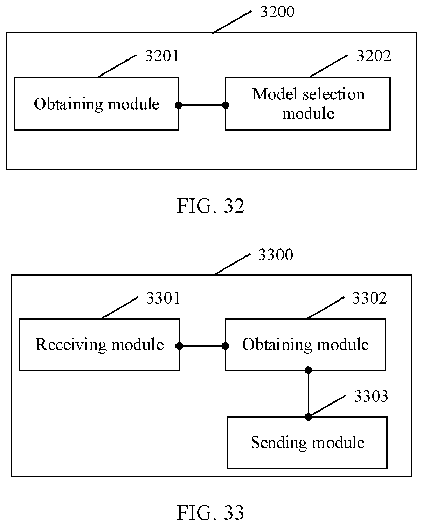

FIG. 32 is a schematic diagram of an embodiment of a neural network search apparatus according to an embodiment of this application. As shown in FIG. 32, a neural network search apparatus 3200 provided in this embodiment of this application may include:

an obtaining module 3201, configured to obtain a plurality of candidate neural networks, where at least one candidate neural network includes a plurality of network layers connected in series, the plurality of network layers include a target transformer layer and a target network layer, the target network layer includes a convolutional layer, and a convolution kernel in the convolution layer is obtained by sampling convolution kernels of a plurality of sizes included in a second search space.

For the descriptions of the obtaining module 3201, refer to the descriptions of step 2801 in the foregoing embodiment, and details are not described herein again.

The neural network search apparatus 3200 further includes: a model selection module 3202, configured to select a target neural network from the plurality of candidate neural networks based on performance of the plurality of candidate neural networks.

For descriptions of the model selection module 3202, refer to the descriptions of step 2802 in the foregoing embodiment, and details are not described herein again.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

FIG. 33 is a schematic diagram of an embodiment of a model providing apparatus according to an embodiment of this application. As shown in FIG. 33, a model providing apparatus 3300 provided in this embodiment of this application may include:

a receiving module 3301, configured to receive a performance requirement sent by a device side, where the performance requirement indicates a performance requirement of a neural network, and the performance requirement includes at least one of the following: data processing precision, a model size, and an implemented task type.

For the descriptions of the receiving module 3301, refer to the descriptions of step 2901 in the foregoing embodiment, and details are not described herein again.

The model providing apparatus 3300 further includes: an obtaining module 3302, configured to obtain, from a plurality of candidate neural networks based on the performance requirement, a target neural network that meets the performance requirement, where the target neural network includes a target transformer layer and a target network layer, the target network layer includes a convolutional layer, and a convolution kernel in the convolution layer is obtained by sampling convolution kernels of a plurality of sizes included in a second search space.

For the descriptions of the obtaining module 3302, refer to the descriptions of step 2902 in the foregoing embodiment, and details are not described herein again.

The model providing apparatus 3300 further includes: a sending module 3303, configured to send the target neural network to the device side.

For the descriptions of the sending module 3303, refer to the descriptions of step 2903 in the foregoing embodiment, and details are not described herein again.

In a possible implementation, the obtaining module 3302 is specifically configured to:

obtain the plurality of candidate neural networks; and
obtain, from the plurality of candidate neural networks based on the performance requirement, the target neural network that meets the performance requirement.

In a possible implementation, a type of the convolution kernel in the convolutional layer is lightweight convolution (lightweight convolution).

In a possible implementation, the target network layer further includes a first addition and normalization layer, a feed-forward layer FFN, and a second addition and normalization layer. The first addition and normalization layer is used to process an input vector of the target network layer and an output vector of the convolutional layer, and the feed-forward layer FFN is used to process the output vector of the first addition and normalization layer. The second addition and normalization layer is used to process the output vector of the first addition and normalization layer and an output vector of the feed-forward layer FFN.

In a possible implementation, the target neural network is used to implement at least one of the following task types:

reading comprehension, text translation, retelling recognition, named entity recognition, text sentiment analysis, natural language inference, automatic text question answering, text intent recognition, text classification, text simplification, or text story generation.

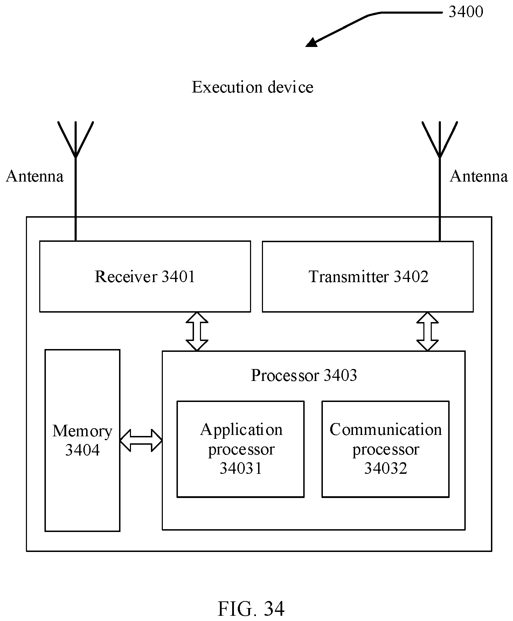

The following describes an execution device provided in an embodiment of this application. FIG. 34 is a schematic diagram of a structure of an execution device according to an embodiment of this application. An execution device 3400 may be specifically represented as a virtual reality VR device, a mobile phone, a tablet, a notebook computer, an intelligent wearable device, a monitoring data processing device, a server, or the like. This is not limited herein. Specifically, the execution device 3400 includes: a receiver 3401, a transmitter 3402, a processor 3403, and a memory 3404 (there may be one or more processors 3403 in the execution device 3400, and one processor is used as an example in FIG. 34). The processor 3403 may include an application processor 34031 and a communication processor 34032. In some embodiments of this application, the receiver 3401, the transmitter 3402, the processor 3403, and the memory 3404 may be connected through a bus or in another manner.

The memory 3404 may include a read-only memory and a random access memory, and provide instructions and data to the processor 3403. A part of the memory 3404 may further include a non-volatile random access memory (non-volatile random access memory, NVRAM). The memory 3404 stores a processor and operation instructions, an executable module or a data structure, a subset thereof, or an extended set thereof. The operation instructions may include various operation instructions for implementing various operations.

The processor 3403 controls an operation of the execution device. In specific application, components of the execution device are coupled by using a bus system. In addition to a data bus, the bus system may further include a power bus, a control bus, a status signal bus, and the like. However, for clear description, various types of buses in the figure are referred as the bus system. The methods disclosed in the foregoing embodiments of this application may be applied to the processor 3403, or may be implemented by the processor 3403. The processor 3403 may be an integrated circuit chip, and has a signal processing capability. In an implementation process, the steps in the foregoing methods may be implemented by using a hardware integrated logical circuit in the processor 3403, or by using instructions in a form of software. The processor 3403 may be a general-purpose processor, a digital signal processor (digital signal processing, DSP), a microprocessor or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 3403 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 3404. The processor 3403 reads information in the memory 3404 and completes the steps in the foregoing methods in combination with hardware of the processor.

The receiver 3401 may be configured to receive input digit or character information, and generate a signal input related to a related setting and function control of the execution device. The transmitter 3402 may be configured to output digital or character information. The transmitter 3402 may be further configured to send instructions to a disk group, to modify data in the disk group.

In this embodiment of this application, in one case, the processor 3403 is configured to perform the data processing method performed by the execution device in the foregoing embodiments (for example, a step of performing model inference by using a target neural network).

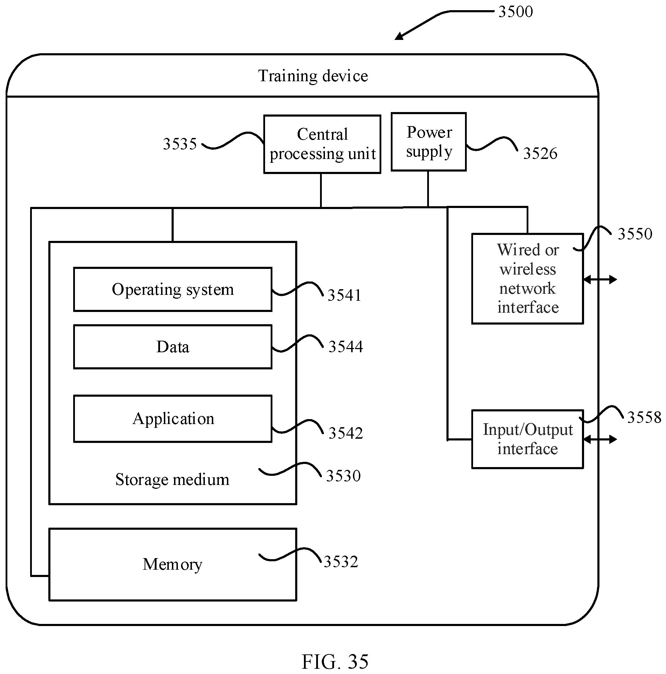

An embodiment of this application further provides a training device. FIG. 35 is a schematic diagram of a structure of a training device according to an embodiment of this application. The apparatuses described in the embodiments corresponding to FIG. 30, FIG. 31, FIG. 32, and FIG. 33 may be deployed on a training device 3500. Specifically, the training device 3500 is implemented by one or more servers. The training device 3500 may vary greatly due to different configurations or performance, and may include one or more central processing units (central processing units, CPUs) 3535 (for example, one or more processors), a memory 3532, and one or more storage media 3530 (for example, one or more mass storage devices) storing an application 3542 or data 3544. The memory 3532 and the storage medium 3530 may be transient storage or persistent storage. A program stored in the storage medium 3530 may include one or more modules (not shown in the figure), and each module may include a series of instruction operations for the training device. Further, the central processing unit 3535 may be configured to communicate with the storage medium 3530, and perform a series of instruction operations in the storage medium 3530 on the training device 3500.

The training device 3500 may further include one or more power supplies 3526, one or more wired or wireless network interfaces 3550, one or more input/output interfaces 3558, or one or more operating systems 3541 such as Windows ServerTM, Mac OS XTM, UnixTM, LinuxTM, and FreeBSDTM.

In this embodiment of this application, the central processing unit 3535 is configured to perform the methods in the embodiments corresponding to FIG. 12, FIG. 27, FIG. 28, and FIG. 29.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program used to perform signal processing. When the program is run on a computer, the computer is enabled to perform the steps performed by the foregoing execution device, or the computer is enabled to perform the steps performed by the foregoing training device.

Each of the execution device, the training device, or the terminal device provided in embodiments of this application may specifically be a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache, or the storage unit may be a storage unit in a radio access device but outside the chip, for example, a read-only memory (read-only memory, ROM) or another type of static storage device capable of storing static information and instructions, or a random access memory (random access memory, RAM).

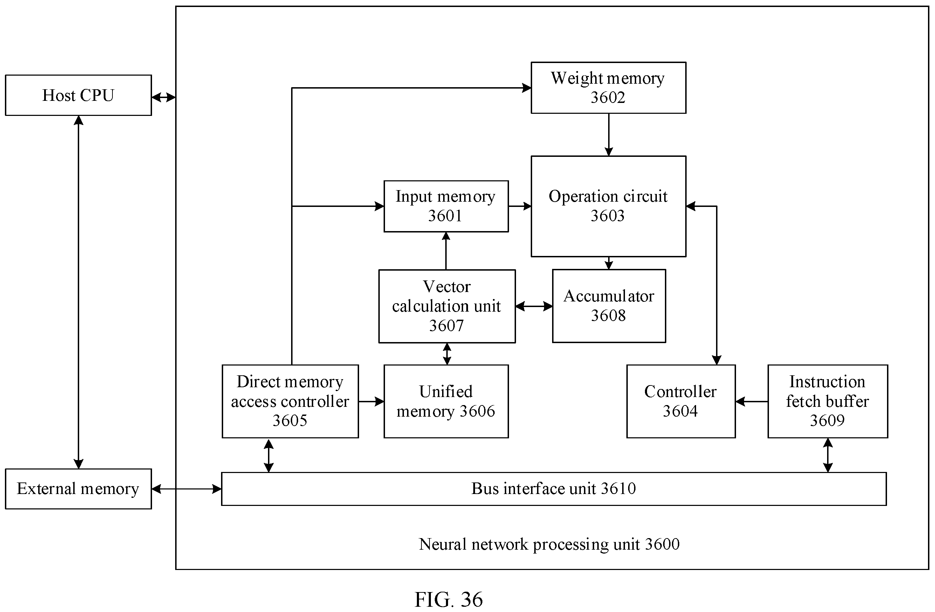

Specifically, refer to FIG. 36. FIG. 36 is a schematic diagram of a structure of a chip according to an embodiment of this application. The chip may be represented as a neural network processing unit NPU 3600. The NPU 3600 is mounted to a host CPU (Host CPU) as a coprocessor, and the host CPU allocates a task. A core part of the NPU is an operation circuit 3603. The operation circuit 3603 is controlled by a controller 3604 to extract matrix data in a memory and perform a multiplication operation.

In some implementations, the operation circuit 3603 includes a plurality of processing engines (process engines, PEs). In some implementations, the operation circuit 3603 is a two-dimensional systolic array. The operation circuit 3603 may alternatively be a one-dimensional systolic array or another electronic circuit that can perform mathematical operations such as multiplication and addition. In some implementations, the operation circuit 3603 is a general-purpose matrix processor.

For example, it is assumed that there is an input matrix A, a weight matrix B, and an output matrix C. The operation circuit fetches data corresponding to the matrix B from a weight memory 3602, and buffers the data on each PE in the operation circuit. The operation circuit fetches data of the matrix A from an input memory 3601, to perform a matrix operation on the matrix B, and stores an obtained partial result or an obtained final result of the matrix into an accumulator (accumulator) 3608.

A unified memory 3606 is configured to store input data and output data. Weight data is transferred to the weight memory 3602 directly through a direct memory access controller (Direct Memory Access Controller, DMAC) 3605. The input data is also transferred to the unified memory 3606 through the DMAC.

BIU is the abbreviation of a bus interface unit. A bus interface unit 3610 is used for interaction between an AXI bus and the DMAC and an instruction fetch buffer (Instruction Fetch Buffer, IFB) 3609.

The bus interface unit 3610 (Bus Interface Unit, BIU for short) is used by the instruction fetch buffer 3609 to obtain instructions from an external memory, and is further used by the direct memory access controller 3605 to obtain original data of the input matrix A or the weight matrix B from the external memory.

The DMAC is mainly configured to transfer input data in the external memory DDR to the unified memory 3606, transfer the weight data to the weight memory 3602, or transfer the input data to the input memory 3601.

A vector calculation unit 3607 includes a plurality of operation processing units. If required, further processing is performed on an output of the operation circuit, for example, vector multiplication, vector addition, an exponential operation, a logarithmic operation, or value comparison. The vector calculation unit 3607 is mainly configured to perform network calculation at a non-convolutional/fully connected layer in a neural network, for example, batch normalization (batch normalization), pixel-level summation, and upsampling on a feature plane.

In some implementations, the vector calculation unit 3607 can store a processed output vector in the unified memory 3606. For example, the vector calculation unit 3607 may apply a linear function or a non-linear function to the output of the operation circuit 3603, for example, perform linear interpolation on a feature plane extracted at a convolutional layer. For another example, the linear function or the non-linear function is applied to a vector of an accumulated value to generate an activation value. In some implementations, the vector calculation unit 3607 generates a normalized value, a pixel-level summation value, or a normalized value and a pixel-level summation value. In some implementations, the processed output vector can be used as an activation input of the operation circuit 3603, for example, to be used in a subsequent layer in the neural network.

The instruction fetch buffer (instruction fetch buffer) 3609 connected to the controller 3604 is configured to store instructions used by the controller 3604.

The unified memory 3606, the input memory 3601, the weight memory 3602, and the instruction fetch buffer 3609 are all on-chip memories. The external memory is private for a hardware architecture of the NPU.

The processor mentioned anywhere above may be a general-purpose central processing unit, a microprocessor, an ASIC, or one or more integrated circuits configured to control program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function performed by a computer program can be easily implemented by using corresponding hardware. In addition, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A neural network search method, wherein the method comprises:

   obtaining a plurality of candidate neural networks, wherein at least one candidate neural network in the plurality of candidate neural networks comprises a target transformer layer, the target transformer layer comprises a target attention head (head), the target attention head comprises a plurality of operators, and the plurality of operators are obtained by sampling a plurality of candidate operators comprised in a first search space; and
   selecting a target neural network from the plurality of candidate neural networks based on performance of the plurality of candidate neural networks.

2. The method according to claim 1, wherein the target attention head is constructed based on the plurality of operators and an arrangement relationship between the plurality of operators, and the arrangement relationship between the plurality of operators is determined in a sampling manner.

3. The method according to claim 1 or 2, wherein the target attention head further comprises a first linear transformation layer, the first linear transformation layer is used to process an input vector of the target attention head by using a target transformation matrix, and the plurality of operators are used to perform an operation on a data processing result of the first linear transformation layer.

4. The method according to claim 3, wherein the target transformation matrix comprises only X transformation matrices, X is a positive integer less than or equal to 4, and a quantity of X is determined in a sampling manner.

5. The method according to any one of claims 1 to 4, wherein sizes of the input vector of the target attention head and an output vector of the target attention head are the same.

6. The method according to any one of claims 1 to 5, wherein a quantity of operators comprised in the target attention head is less than a preset value.

7. The method according to any one of claims 1 to 6, wherein the at least one candidate neural network comprises a plurality of network layers connected in series, the plurality of network layers comprise the target transformer layer, and a location of the target transformer layer in the plurality of network layers is determined in a sampling manner.

8. The method according to any one of claims 1 to 7, wherein the at least one candidate neural network comprises the plurality of network layers connected in series, the plurality of network layers comprise the target transformer layer and a target network layer, and the target network layer comprises a convolutional layer.

9. The method according to claim 8, wherein a location of the target network layer in the plurality of network layers is determined in a sampling manner.

10. The method according to claim 8 or 9, wherein a convolution kernel in the convolutional layer is obtained by sampling convolution kernels of a plurality of sizes comprised in a second search space.

11. The method according to any one of claims 1 to 10, wherein the plurality of candidate neural networks comprise a target candidate neural network; the obtaining a plurality of candidate neural networks specifically comprises: constructing a target attention head in the target candidate neural network; and
the constructing a target attention head in the target candidate neural network comprises:

   obtaining a first neural network, wherein the first neural network comprises a first transformer layer, the first transformer layer comprises a first attention head, and a plurality of operators comprised in the first attention head are obtained by sampling a plurality of candidate operators comprised in the first search space; and determining replacement operators from M candidate operators based on positive impact on performance of the first neural network when target operators in the first attention head are replaced with the M candidate operators in the first search space; and replacing the target operators in the first attention head with the replacement operators, to obtain the target attention head, wherein M is a positive integer.

12. The method according to claim 11, wherein when the target operator is located at a target operator location of the second neural network, the method further comprises:
determining, based on an operator that is in each of a plurality of trained second neural networks and that is located at the target operator location and performance of the plurality of trained second neural networks, and/or an occurrence frequency of the operator that is in each trained second neural network and that is located at the target operator location, the positive impact on the performance of the first neural network when the target operators in the first attention head are replaced with the M candidate operators in the first search space.

13. The method according to claim 11 or 12, wherein the method further comprises:

   performing parameter initialization on the target candidate neural network based on the first neural network, to obtain an initialized target candidate neural network, wherein an updatable parameter in the initialized target candidate neural network is obtained by performing parameter sharing on an updatable parameter at a same location in the first neural network; and
   training the target candidate neural network on which parameter initialization is performed, to obtain performance of the target candidate neural network.

14. A model providing method, wherein the method comprises:

   receiving a performance requirement sent by a device side, wherein the performance requirement indicates a performance requirement of a neural network;
   obtaining, from a plurality of candidate neural networks based on the performance requirement, a target neural network that meets the performance requirement, wherein at least one candidate neural network in the plurality of candidate neural networks comprises a target transformer layer, the target transformer layer comprises a target attention head (head), the target attention head comprises a plurality of operators, and the plurality of operators are obtained by sampling a plurality of candidate operators comprised in a first search space; and
   sending the target neural network to the device side.

15. The method according to claim 14, wherein in a possible implementation, the performance requirement comprises at least one of the following: data processing precision, a model size, and an implemented task type.

16. The method according to claim 14 or 15, wherein the target attention head is constructed based on the plurality of operators and an arrangement relationship between the plurality of operators, and the arrangement relationship between the plurality of operators is determined in a sampling manner.

17. The method according to any one of claims 14 to 16, wherein the target attention head further comprises a first linear transformation layer, the first linear transformation layer is used to process an input vector of the target attention head by using a target transformation matrix, and the plurality of operators are used to perform an operation on a data processing result of the first linear transformation layer; and the target transformation matrix comprises only X transformation matrices, X is a positive integer less than or equal to 4, and a quantity of X is determined in a sampling manner.

18. The method according to any one of claims 14 to 17, wherein the at least one candidate neural network comprises a plurality of network layers connected in series, the plurality of network layers comprise the target transformer layer, and a location of the target transformer layer in the plurality of network layers is determined in a sampling manner.

19. The method according to any one of claims 14 to 18, wherein the at least one candidate neural network comprises the plurality of network layers connected in series, the plurality of network layers comprise the target transformer layer and a target network layer, and the target network layer comprises a convolutional layer.

20. The method according to claim 19, wherein a location of the target network layer in the plurality of network layers is determined in a sampling manner.

21. The method according to claim 19 or 20, wherein a convolution kernel in the convolutional layer is obtained by sampling convolution kernels of a plurality of sizes comprised in a second search space.

22. A neural network search apparatus, wherein the apparatus comprises:

an obtaining module, configured to obtain a plurality of candidate neural networks, wherein at least one candidate neural network in the plurality of candidate neural networks comprises a target transformer layer, the target transformer layer comprises a target attention head (head), the target attention head comprises a plurality of operators, and the plurality of operators are obtained by sampling a plurality of candidate operators comprised in a first search space; and
a model selection module, configured to select a target neural network from the plurality of candidate neural networks based on performance of the plurality of candidate neural networks.

23. The apparatus according to claim 22, wherein the target attention head is constructed based on the plurality of operators and an arrangement relationship between the plurality of operators, and the arrangement relationship between the plurality of operators is determined in a sampling manner.

24. The apparatus according to claim 22 or 23, wherein the target attention head further comprises a first linear transformation layer, and the first linear transformation layer is used to process an input vector of the target attention head by using a target transformation matrix; and the plurality of operators are used to perform an operation on a data processing result of the first linear transformation layer.

25. The apparatus according to claim 24, wherein the target transformation matrix comprises only X transformation matrices, X is a positive integer less than or equal to 4, and a quantity of X is determined in a sampling manner.

26. The apparatus according to any one of claims 22 to 25, wherein sizes of the input vector of the target attention head and an output vector of the target attention head are the same.

27. The apparatus according to any one of claims 22 to 26, wherein the at least one candidate neural network comprises a plurality of network layers connected in series, the plurality of network layers comprise the target transformer layer, and a location of the target transformer layer in the plurality of network layers is determined in a sampling manner.

28. The apparatus according to any one of claims 22 to 27, wherein the at least one candidate neural network comprises the plurality of network layers connected in series, the plurality of network layers comprise the target transformer layer and a target network layer, and the target network layer comprises a convolutional layer.

29. The apparatus according to claim 28, wherein a location of the target network layer in the plurality of network layers is determined in a sampling manner.

30. The apparatus according to claim 28 or 29, wherein a convolution kernel in the convolutional layer is obtained by sampling convolution kernels of a plurality of sizes comprised in a second search space.

31. A neural network search apparatus, wherein the apparatus comprises a memory and a processor; the memory stores code, and the processor is configured to obtain the code, and perform the method according to any one of claims 1 to 21.

32. A computer-readable storage medium, comprising computer-readable instructions, wherein when the computer-readable instructions are run on a computer device, the computer device is enabled to perform the method according to any one of claims 1 to 21.

33. A computer program product, comprising computer-readable instructions, wherein when the computer-readable instructions are run on a computer device, the computer device is enabled to perform the method according to any one of claims 1 to 21.

Intelligent information chain

Intelligent product and industry application

| Translation/Text analysis/... | Voice/Vision/Image/... |

Data

Data processing:

| Data training/Machine learning/ Deep learning | Search/Inference/ Decision-making | ... |

Infrastructure

| Sensor | Intelligent chip | Basic platform | ... |

IT value chain

FIG. 1

Performance
requirement

User
equipment

Search result

Neural
network
search
system
(server)
100

FIG. 2

Search result (target neural network)
160

Neural network search system 100

Quality evaluation
engine 150

Training engine
140

Candidate selection
engine 130

Performance
requirement 103

Training data
102

Verification data
104

FIG. 3

Interaction interface

Neural network search request

Search result (target neural network)

...

Memory

Processor

Data training/Machine learning/Deep learning

Search/Inference/Decision-making

...

Neural network search device (server)

13:21

User

User equipment

FIG. 4

EP 4 361 843 A1

User    User equipment

13:21

Interaction interface

Neural network search request | Search result (target neural network) | ...

Memory    Processor:    Data training/Machine learning/Deep learning | Search/ Inference/ Decision-making | ...

Neural network search device

FIG. 5

Interaction interface

Voice/Query statement/ Text...

Voice response/Response statement/Text...

...

Memory

Processor

Data training/Machine learning/Deep learning

Search/Inference/ Decision-making

...

Data processing device (server)

User

User equipment

13:21

FIG. 6

| User | User equipment |
|---|---|
| | 13:21 |

**Interaction interface**

| Voice/Query statement/Text... | Voice response/Response statement/Text... | ... |
|---|---|---|

| Memory | Processor: | Data training/Machine learning/Deep learning | Search/Inference/Decision-making | ... |
|---|---|---|---|---|

FIG. 7

300

Data storage system 350

Execution device 310

...

Communication network

Local device 301

Local device 302

For example

FIG. 8

FIG. 9

| | Output layer 240 |
|---|---|
| Fully connected layer 230 | Hidden layer n (23n) |
| | Hidden layer 2 (232) |
| | Hidden layer 1 (231) |

Convolutional neural network (CNN) 200

| Convolutional layer/Pooling layer 220 | 226 | 226 |
|---|---|---|
| | 225 | 225 |
| | 224 | 224 |
| | 223 | 223 |
| | 222 | 222 |
| | 221 | 221 |

Input layer 210

FIG. 10

FIG. 11

Obtain a plurality of candidate neural networks, where at least one candidate neural network in the plurality of candidate neural networks includes a target transformer layer, the target transformer layer includes a target attention head (head), the target attention head includes a plurality of operators, and the plurality of operators are obtained by sampling a plurality of candidate operators included in a first search space

1201

Select a target neural network from the plurality of candidate neural networks based on performance of the plurality of candidate neural networks

1202

FIG. 12

Transformer model

Neural network layer

...

Target transformer layer

...

Neural network layer

Embedding layer

FIG. 13

FIG. 14

FIG. 15

FIG. 16

FIG. 17

FIG. 18

FIG. 19

FIG. 20

FIG. 21

Transformer layer

Target network layer

Transformer layer

Target network layer

Transformer layer

Target network layer

Transformer layer

Target network layer

Transformer layer

Target network layer

Transformer layer

Target network layer

FIG. 22

FIG. 23

FIG. 24

Kernel: 65x1     Transformation matrix 5x5     Kernel: 5x1     Kernel: 65x1     Transformation matrix 3x3     Kernel: 3x1

FIG. 25

Output

(12) attention

(11) conv_k_3

(10) attention

~
TO
FIG. 26B

(9) conv_k_7

(8) attention

(7) conv_k_7

(6) attention

(5) conv_k_3

(4) attention

(3) conv_k_9

~
TO
FIG. 26C

(2) attention

(1) conv_k_65

Input

**Backbone: AutoBERT-Zero**    FIG. 26A

(2) Searched Attention

(4) Searched Attention

(6) Searched Attention

CONT. FROM FIG. 26A

TO FIG. 26C

FIG. 26B

EP 4 361 843 A1

(8) Searched Attention

(10) Searched Attention

(12) Searched Attention

FIG. 26C

EP 4 361 843 A1

Receive a performance requirement sent by a device side, where the performance requirement indicates a performance requirement of a neural network, and the performance requirement includes at least one of the following: data processing precision, a model size, and an implemented task type — 2701

Obtain, from a plurality of candidate neural networks based on the performance requirement, a target neural network that meets the performance requirement, where the target neural network includes a target transformer layer, the target transformer layer includes a target attention head (head), the target attention head includes a plurality of operators, and the plurality of operators are obtained by sampling a plurality of candidate operators included in a first search space — 2702

Send the target neural network to the device side — 2703

FIG. 27

Obtain a plurality of candidate neural networks, where at least one candidate neural network includes a plurality of network layers connected in series, the plurality of network layers include a target transformer layer and a target network layer, the target network layer includes a convolutional layer, and a convolution kernel in the convolution layer is obtained by sampling convolution kernels of a plurality of sizes included in a second search space — 2801

Select a target neural network from the plurality of candidate neural networks based on performance of the plurality of candidate neural networks — 2802

FIG. 28

Receive a performance requirement sent by a device side, where the performance requirement indicates a performance requirement of a neural network, and the performance requirement includes at least one of the following: data processing precision, a model size, and an implemented task type — 2901

Obtain, from a plurality of candidate neural networks based on the performance requirement, a target neural network that meets the performance requirement, where the target neural network includes a target transformer layer and a target network layer, the target network layer includes a convolutional layer, and a convolution kernel in the convolution layer is obtained by sampling convolution kernels of a plurality of sizes included in a second search space — 2902

Send the target neural network to the device side — 2903

FIG. 29

3000

3001
Obtaining module

3002
Model selection module

FIG. 30

3100

3101
Receiving module

3102
Obtaining module

3103
Sending module

FIG. 31

3200

3201

Obtaining module

3202

Model selection module

FIG. 32

3300

3301

Receiving module

3302

Obtaining module

3303

Sending module

FIG. 33

3400

Execution device

| | |
|---|---|
| Receiver 3401 | Transmitter 3402 |

Processor 3403

| Memory 3404 | Application processor 34031 | Communication processor 34032 |

Antenna

Antenna

FIG. 34

FIG. 35

FIG. 36

## INTERNATIONAL SEARCH REPORT

| International application No. |
|---|
| **PCT/CN2022/105115** |

| **A.** | **CLASSIFICATION OF SUBJECT MATTER** |
|---|---|

G06F 16/332(2019.01)i; G06N 3/04(2006.01)i

According to International Patent Classification (IPC) or to both national classification and IPC

| **B.** | **FIELDS SEARCHED** |
|---|---|

Minimum documentation searched (classification system followed by classification symbols)

G06F, G06N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 神经网络搜索, 注意力头, 算子, 线性变换, neural network search+, neural architecture search+, attention head, operator+, transformer

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| PX | CN 113656563 A (HUAWEI TECHNOLOGIES CO., LTD.) 16 November 2021 (2021-11-16) claims 1-33 | 1-33 |
| A | CN 112949832 A (DINGFU INTELLIGENT TECHNOLOGY CO., LTD.) 11 June 2021 (2021-06-11) description, paragraphs [0033]-[0056], and figures 1-3 | 1-33 |
| A | CN 112445823 A (HUAWEI TECHNOLOGIES CO., LTD.) 05 March 2021 (2021-03-05) entire document | 1-33 |
| A | CN 113065645 A (HUAWEI TECHNOLOGIES CO., LTD.) 02 July 2021 (2021-07-02) entire document | 1-33 |
| A | CN 112561027 A (HUAWEI TECHNOLOGIES CO., LTD.) 26 March 2021 (2021-03-26) entire document | 1-33 |
| A | WO 2020160252 A1 (GOOGLE LLC) 06 August 2020 (2020-08-06) entire document | 1-33 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 September 2022** | **23 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/105115**

| Patent document cited in search report | | | Publication date (day/month/year) | Patent family member(s) | | | Publication date (day/month/year) |
|---|---|---|---|---|---|---|---|
| CN | 113656563 | A | 16 November 2021 | None | | | |
| CN | 112949832 | A | 11 June 2021 | None | | | |
| CN | 112445823 | A | 05 March 2021 | None | | | |
| CN | 113065645 | A | 02 July 2021 | None | | | |
| CN | 112561027 | A | 26 March 2021 | WO | 2021057056 | A1 | 01 April 2021 |
| WO | 2020160252 | A1 | 06 August 2020 | US | 2022121906 | A1 | 21 April 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110803202X